(19) **Europäisches Patentamt**
**European Patent Office**
**Office européen des brevets**

(11) **EP 4 700 714 A1**

(12) **EUROPEAN PATENT APPLICATION**

(43) Date of publication:
**25.02.2026 Bulletin 2026/09**

(21) Application number: **25197164.4**

(22) Date of filing: **20.08.2025**

(51) International Patent Classification (IPC):
**G06V 10/25** *(2022.01)*    **G06V 10/44** *(2022.01)*
**G06V 10/82** *(2022.01)*    **G06V 10/764** *(2022.01)*
**G06V 10/77** *(2022.01)*

(52) Cooperative Patent Classification (CPC):
**G06V 10/82; G06V 10/454; G06V 10/764;
G06V 10/7715**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **22.08.2024 US 202463685868 P
12.11.2024 EP 24212527**

(71) Applicant: **Dolby Laboratories Licensing
Corporation
San Francisco, CA 94103 (US)**

(72) Inventors:
• **Huang, Tsung-Wei
Sunnyvale, 94089 (US)**
• **SU, Guan-Ming
Sunnyvale, 94085-4703 (US)**
• **Choudhury, Anustup Kumar
Campbell, California, 95008 (US)**

(74) Representative: **Dolby International AB
Patent Group Europe
77 Sir John Rogerson's Quay
Block C
Grand Canal Docklands
Dublin, D02 VK60 (IE)**

(54) **NEURAL REPRESENTATION FOR EVENT-CAMERA DATA**

(57)     Methodology for generating a neural representation of event-camera data. In some examples, a method of representing event-camera data includes converting a set of the event-camera data into a corresponding set of voxel data for a voxel grid in a three-dimensional space in which first and second dimensions correspond to first and second spatial coordinates of an image frame, and a third dimension corresponds to time. The method further includes training a neural network to represent the voxel grid.

**EP 4 700 714 A1**

**Description**

1. Cross-Reference to Related Applications

This application claims the benefit of priority from United States Provisional Patent Application Ser. No. 63/685,868, filed on 22 August 2024, and European Patent Application No. 24212527.6, filed on 12 November 2024, each of which is incorporated by reference herein in its entirety.

2. Field of the Disclosure

Various example embodiments relate to event-based vision, event cameras, and event-camera data processing.

3. Background

Many computer-vision algorithms and systems rely on image-based (frame capture) RGB cameras. Some of such algorithms implement bandwidth/latency tradeoffs directed at capturing and delivering the intended information, such as the information needed for a safe driving experience with an advanced driver-assistance system. To address certain limitations associated with such tradeoffs, event cameras emerged as alternative computer-vision sensors. Unlike frame-capture cameras, event cameras measure changes in intensity asynchronously, thereby potentially offering higher temporal resolution, improved data sparsity, and reduced bandwidth requirements. Despite these benefits offered by event cameras, data-processing algorithms for event cameras still lag behind the frame-based data-processing algorithms in at least some performance metrics.

BRIEF SUMMARY OF SOME SPECIFIC EMBODIMENTS

Disclosed herein are various examples of a neural representation for an event voxel grid containing event-camera data. In some examples, the neural representation is selected from a multilayer perceptron (MLP), a convolutional neural network (CNN) serially connected with an MLP, a tensor-decomposition neural network, and a hash-encoding neural network. In some examples, the neural representation is trained via gradient descent using an applied loss function constructed based on one or more primary loss functions, which include, but not limited to, mean square error (MSE) loss, structural similarity index measure (SSIM) loss, feature loss, and task-specific loss. In one example, the applied loss function includes a weighted sum of two or more of the primary loss functions. Analyses of relative capabilities and effects of different representations and different model configurations are presented for some examples. In at least some examples, the neural representation can beneficially be used for downstream processes and/or operations, such as, for example, compressing the event-camera data for transmission through a bandwidth-limited communication channel, various generative machine-learning tasks, and various computer vision tasks.

In one example, a method of representing event-camera data comprises: converting a set of the event-camera data into a corresponding set of voxel data for a voxel grid in a three-dimensional (3D) space in which first and second dimensions correspond to first and second spatial coordinates of an image frame, and a third dimension corresponds to time; and training a neural network to represent the voxel grid.

In another example, a method of predicting event-camera data comprises inputting one or more coordinate values corresponding to a three-dimensional (3D) space to a neural network trained to represent a voxel grid, wherein first and second dimensions of the 3D space correspond to first and second spatial coordinates of an image frame corresponding to the event-camera data, and a third dimension of the 3D space corresponds to time; and wherein the voxel grid in the 3D space is generated by converting a set of the event-camera data into a corresponding set of voxel data for the 3D space.

According to yet another example embodiment, provided is a non-transitory computer-readable medium storing instructions that, when executed by an electronic processor, cause the electronic processor to perform operations comprising any of the above methods.

In yet another example, an apparatus for representing event-camera data, comprises: at least one processor; and at least one memory including program code, wherein the at least one memory and the program code are configured to, with the at least one processor, cause the apparatus at least to: convert a set of the event-camera data into a corresponding set of voxel data for a voxel grid in a three-dimensional (3D) space in which first and second dimensions correspond to first and second spatial coordinates of an image frame, and a third dimension corresponds to time; and train a neural network to represent the voxel grid.

In yet another example, an apparatus for predicting event-camera data comprises: at least one processor; and at least one memory including program code, wherein the at least one memory and the program code are configured to, with the at least one processor, cause the apparatus at least to: input one or more coordinate values corresponding to a three-dimensional (3D) space to a neural network trained to represent a voxel grid, wherein first and second dimensions of the 3D space correspond to first and second spatial coordinates of an image frame corresponding to the event-camera data, and a third dimension of the 3D space corresponds to time; and wherein the voxel grid in the 3D space is generated by converting a set of the event-camera data into a corresponding set of voxel data for the 3D space.

In some examples of the above apparatus, the at least one memory and the program code are further configured to, with the at least one processor, cause the apparatus to: repeatedly sample the voxel grid at different values of the time by inputting different sets of coordinate values to the neural network; generate an event video by constructing a sequence of image frames using the samples of the voxel grid representing said different values of the time; and play the event video on a display device.

BRIEF DESCRIPTION OF THE DRAWINGS

Other aspects, features, and benefits of various disclosed embodiments will become more fully apparent, by way of example, from the following detailed description and the accompanying drawings, in which:

FIG. 1 is a flowchart illustrating a workflow for generating a neural representation of event-camera data according to some examples.

FIG. 2 is a flowchart illustrating preprocessing operations used in the workflow of FIG. 1 according to some examples.

FIG. 3 is a block diagram illustrating a testing workflow corresponding to the neural representation used in the workflow of FIG. 1 according to one example.

FIGS. 4-7 are block diagrams illustrating several structures used to implement the MLP for the testing workflow of FIG. 3 according to some examples.

FIG. 8 is a block diagram illustrating a testing workflow corresponding to the neural representation used in the workflow of FIG. 1 according to another example.

FIG. 9 is a block diagram illustrating a NeRV block used in the testing workflow of FIG. 8 according to one example.

FIG. 10 is a block diagram illustrating a testing workflow corresponding to the neural representation used in the workflow of FIG. 1 according to yet another example.

FIG. 11 pictorially illustrates a tensor decomposition that can be used with the testing workflow of FIG. 10 according to some examples.

FIG. 12 is a block diagram illustrating additional details of the testing workflow of FIG. 10 according to one example.

FIG. 13 is a block diagram illustrating a testing workflow corresponding to the neural representation used in the workflow of FIG. 1 according to yet another example.

FIG. 14 pictorially illustrates some operations that can be used in the testing workflow of FIG. 13 according to some examples.

FIG. 15 graphically illustrates the quality-size tradeoffs that can be realized with various embodiments of the neural representation used in the workflow of FIG. 1 according to some examples.

FIG. 16 graphically illustrates the relation between peak signal-to-noise ratio (PSNR) of interpolated frames and the MSE of the predicted event voxel grid for different model configurations according to some examples.

FIG. 17 graphically illustrates the relation between the PSNR of interpolated frames and the model size for different model configurations according to some examples.

FIG. 18 is a flowchart illustrating a method of representing event-camera data according to some examples.

FIG. 19 is a flowchart illustrating a method of predicting event-camera data according to some examples.

FIG. 20 is a block diagram of an example computing device, one or more instances of which can be used to implement various ones of the disclosed workflows and methods, according to some examples.

DETAILED DESCRIPTION

Event cameras have drawn increasing attention due to the offered benefits and/or advantages in temporal resolution, dynamic range, and robustness to motion blur and ill lighting conditions with respect to conventional color frame-capture cameras. The enhanced sensory capabilities of event camera can provide certain benefits in various computer-vision tasks, such as the optical flow, depth estimation, ego-motion estimation, and video-frame interpolation. Because the raw event data are typically in the form of a list of events and cannot be straightforwardly consumed by array-based neural network modules, such as convolutional neural networks (CNNs) or vision transformers (ViTs), some approaches may employ voxelization to convert the unstructured raw event data into the data on the event voxel grid, which is a spatiotemporal three-dimensional (3D) array.

Herein, the term "voxel" refers to a three-dimensional counterpart to a pixel. A voxel represents a value on a regular grid in a 3D space. For example, voxels are frequently used in the visualization and analysis of medical and scientific data (e.g., data for geographic information systems (GIS)). In some examples, the 3D space in which the voxels are defined is a spatiotemporal space, wherein the first and second dimensions correspond to spatial (e.g., 2D planar) coordinates of an image, and the third dimension corresponds to time.

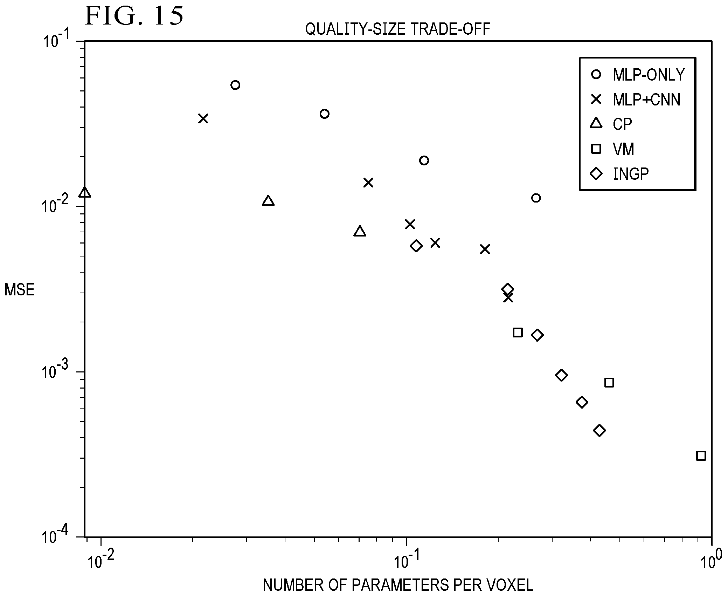

While event cameras have the aforementioned advantages over conventional color frame-capture cameras, the explicit event voxel grid representation can be inefficient, since event data is spatiotemporally sparse, resulting in empty voxels. In the present disclosure, a learning-based framework is introduced to further represent event voxel grids using neural networks and/or neural features. Three types of neural representations are proposed herein: 1) Multi-Layer Perceptron (MLP), 2) Tensor Decomposition, and 3) Hash Encoding. As described further herein (see, for example, Figure 15), the different proposed neural representations vary in performance for different model sizes. Overall, the inventors have observed that for a smaller model size, a tensor decomposition representation can achieve smaller error values. On the other hand, for a larger model size, an MLP+CNN or hash encoding representation can provide a relatively better performance. Thus, a suitable model for neural representation can be chosen based on the desired balance between model size and performance.

The concept of neural representation as provided for herein is to represent the voxel grid representation using the neural network (i.e. the weights (parameters) of the neural network) itself. This should not be confused with the idea of applying a trained neural network to one kind of representation to generate a different representation (for example, to generate a more dense 'latent' representation of a particular input). In the examples described below, a neural network is trained that takes input of a set of coordinates (space and time, or just time) and generates a corresponding voxel grid value. No information about the event voxel grid is provided to the neural network after training, the information is rather encoded in the neural network itself.

Such neural representations have the advantage of providing a representation that is easily incorporated into end-to-end deep learning architectures. The neural representations themselves can be trained using conventional gradient descent algorithms in an end-to-end manner. Furthermore, they can provide a more efficient representation of event voxel grids while maintaining important features for downstream tasks. Due to the sparseness of event voxel grid representations, the number of parameters of the neural representation may be less than the number of values in the event voxel grid representation, while still preserving the required information to reproduce the event voxel grid representation.

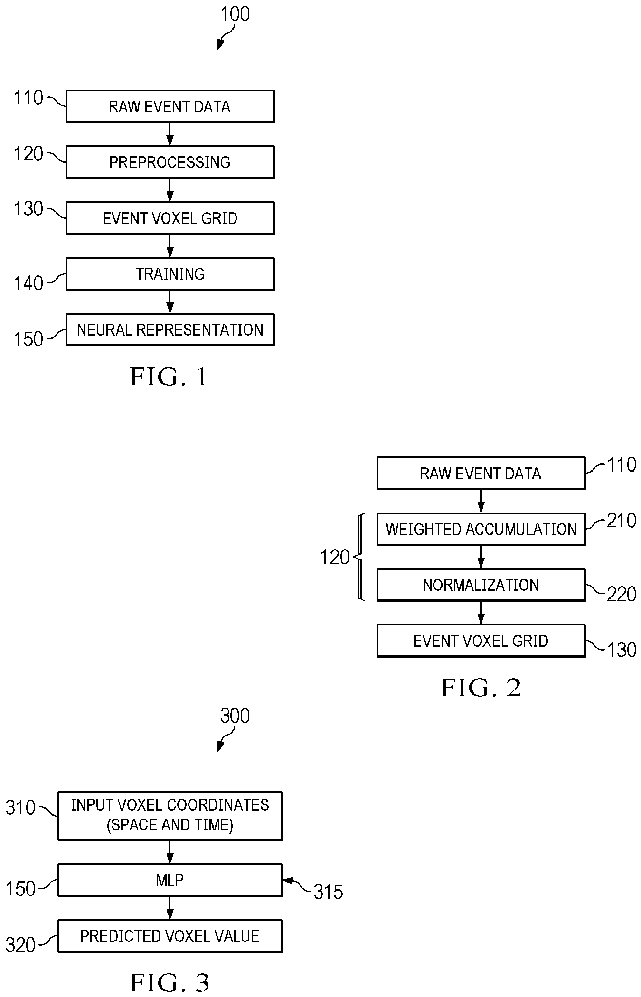

FIG. 1 is a block diagram illustrating a workflow (100) for generating a neural representation (150) of event-camera data (110) according to some examples. In some examples, the event-camera data (110) include raw event data that are read out from the corresponding event camera. The event-camera data (110) are subjected to a set of preprocessing operations (120), and the resulting preprocessed data are converted into the corresponding event voxel grid data (130). Thereafter, the event voxel grid data (130) are used in a training process (140) configured to train a selected neural network. In various examples, the neural network can be selected from a plurality of choices, including but not limited to a Multi-Layer Perceptron (MLP), a tensor-decomposition neural network, and a hash-encoding neural network. After the training process (140) is completed, the corresponding trained neural network provides the neural representation (150) of the event-camera data (110). In some examples, the neural representation (150) can beneficially be used to compress the event-camera data (110), e.g., for transmission through a bandwidth-limited communication channel. In some other examples, the neural representation (150) can beneficially be used for various downstream generative machine-learning tasks.

FIG. 2 is a flowchart illustrating the preprocessing operations (120) used in the workflow (100) according to some examples. In the example shown, the preprocessing operations (120) include a weighted accumulation (210) and a normalization (220). These operations are used to convert the raw event data (110) to the event voxel grid data (130) as described in more detail below.

In one example, an event camera includes event-based sensors. Unlike conventional frame-based sensors, event-based sensors work independently and asynchronously based on a brightness change. For each pixel, the corresponding sensor stores a reference brightness level and compares the reference brightness level to the current brightness continuously. When the brightness change exceeds the applicable threshold value, the sensor registers an event. The attributes of the event include the pixel coordinates, the event timestamp, and the polarity of the change. When the brightness increases, the polarity is positive. When the brightness decreases, the polarity is negative.

In some examples, the raw event data captured by the event camera can be viewed as a list of events $\{(x_i, y_i, t_i, p_i)|i = 1, ..., N\}$, where $N$ is the total number of events; $x_i$ and $y_i$ are the pixel coordinates of the i-th event; $t_i$ is the time of the i-th event; and $p_i$ is the polarity of the i-th event. In the original event camera output, $x_i$ and $y_i$ are integer pixel coordinates, but after the event camera calibration and alignment with the frame capture RGB camera, $x_i$ and $y_i$ may become non-integer. Similarly, $t_i$ in the original event-camera output is integer, but after the alignment with the RGB camera frames, it may become non-integer. Herein, without a loss of generality, it is assumed that $x_i, y_i, t_i \in \mathbb{R}$. In addition, it should be noted that in the original event camera output, $p_i$ is binary, i.e., 0 or 1 for the negative and positive polarities, respectively. However, in the voxel grid representation, the voxels may have continuous values, where negative and positive values represent negative and positive polarities, respectively, and a zero value indicates "no event." Therefore, to facilitate further discussion, the polarity is redefined as $p_i \in \{-1, +1\}$, where -1 represents the negative polarity and +1 represents the positive polarity.

In a typical example, the raw event data form an unstructured list of event points that does not lend itself to efficient processing by array-based neural network modules, such as convolutional neural networks (CNNs) and vision transformers (ViTs), in typical image and video processing tasks. Therefore, to utilize the event data more efficiently, one approach is to convert the unstructured raw event data to a voxel grid, which can be stored and processed as a 3D array in spatial and temporal dimensions.

In some examples, the voxel grid (130) can be constructed by discretizing the space and time dimensions into grids. For example, for the space dimension, the grid centers are redefined as 2D pixel locations, i.e., [0,1, ..., $H$ - 1] for the y dimension and [0,1, ..., $W$ - 1] for the x dimension, where $H$ and $W$ are the image height and width, respectively. For the time dimension, $T$ grid centers are uniformly defined in a user-defined time window [$t_{min}$, $t_{max}$], wherein the 0-th grid center represents $t_{min}$, and the $(T$ - 1)-th grid center represents $t_{max}$.

In various examples, the weighted accumulation (210) can be configured to perform weighted accumulation for a scalar grid or for a two-channel grid. Both types of accumulation are described in more detail below.

In one example, the weighted accumulation (210) is configured to accumulate the events into the corresponding nearby voxels. For example, for the $(t, y, x)$-th voxel, the corresponding weighted accumulation operations can be implemented in a scalar event voxel grid (130) in accordance with the following equation:

$$V(t, y, x) = \sum_{i=1}^{N} p_i w_i \qquad (1)$$

where $w_i$ is the accumulation weight for the i-th event of the $N$ events. This approach produces a 3D tensor $V \in \mathbb{R}^{T \times H \times W}$. Some example implementations of the weighted accumulation (210) may benefit from certain features described in Alex Zihao Zhu, Liangzhe Yuan, Kenneth Chaney, Kostas Daniilidis, "Unsupervised event-based learning of optical flow, depth, and egomotion," Proceedings of the IEEE/CVF Conference on Computer Vision and Pattern Recognition, pp. 989-997, 2019, which is incorporated herein by reference in its entirety.

In one example, an accumulation weight, $w_i$, is based on the bilinear sampling kernel $k_b$ and the distance between the voxel center and the event as follows:

$$w_i = k_b(t - t_i^*) k_b(y - y_i) k_b(x - x_i) \qquad (2)$$

$$k_b(a) = \max(0, 1 - |a|) \qquad (3)$$

where $t_i^*$ is the normalized event time that matches the interval of the voxel grid. Mathematically, $t_i^*$ can be expressed as follows:

$$t_i^* = (T - 1) \frac{t_i - t_{min}}{t_{max} - t_{min}} \qquad (4)$$

In other examples, other types of kernels, such as the nearest neighbor or bicubic kernel, can also be used.

In a two-channel grid, instead of accumulating both negative and positive events together into a single scalar, the weighted accumulation (210) is configured to accumulate the negative and positive events into two separate dedicated channels, e.g., to avoid mutual cancellation of polarities and preserve more information from the raw event data (110). Accordingly, Eq. (1) is modified to produce a 2-channel event voxel grid (130), in which the first and second channels are dedicated to negative and positive events, respectively:

$$V(t, y, x) = (\sum_{i=1}^{N} p_i w_i \mathbf{1}(p_i < 0), \sum_{i=1}^{N} p_i w_i \mathbf{1}(p_i > 0)) \quad (5)$$

where the function $\mathbf{1}(A)$ is defined as $1(A) = 1$ if $A$ is True, and 0 otherwise. In this case, each voxel is a two-channel vector, i.e., $V(t, y, x) \in \mathbb{R}^2$. This approach produces a 4-D tensor $V \in \mathbb{R}^{T \times H \times W \times 2}$. Empirically, it is observed that the scalar event voxel grid (130) and the two-channel event voxel grid (130) can be modelled using similar model sizes and achieve similar prediction accuracy (or error magnitude). This observation can be qualitatively understood as being due to the fact that the number of non-zero entries increases only by a small fraction (e.g., by less than 5% in representative cases) in the two-channel event voxel grid (130) compared to the scalar event voxel grid (130). Therefore, in some examples described below, the performance is evaluated using the scalar event voxel grid (130), with the assumption that a similar performance can be obtained with the two-channel event voxel grid (130).

In some examples, the normalization (220) is implemented based on the following concepts. As already indicated above, during the preprocessing (120), a voxel accumulates the events that fall into its spatiotemporal proximity. Therefore, the range of the values in the resulting event voxel grid (130) is affected by the grid size. To facilitate further modeling of the event voxel grid (130) using various neural representations (150), the normalization (220) is used to normalize each of the variously sized event voxel grids (130) into a consistent distribution of values.

In one example, the normalization (220) is configured to normalize data for machine learning tasks by making the data to be of zero mean and of unit variance. For the event voxel grid (130), since most of the voxels have zeros, the normalization (220) is configured to apply the normalization on only non-zero entries $v_i$ in V, e.g., as follows:

$$v_i \leftarrow \frac{v_i - \mu}{\sigma} \forall v_i \neq 0 \quad (6)$$

where $\mu$ and $\sigma$ are the mean and variance of the non-zero entries.

In some examples, a potential issue of zero mean normalization is that it may change the signs of some voxels when shifting them by $\mu$. This change could potentially confuse the models in the downstream tasks. Therefore, in some cases, the normalization (220) can be configured to make the voxels to be of unit variance only, without the zero mean constraint indicated above, to preserve the polarity of each voxel grid, i.e., the sign of each entry remains the same (unchanged). The corresponding modification is reflected in Eq. (7):

$$v_i \leftarrow \frac{v_i}{\sigma} \quad (7)$$

In some examples, the neural representation (150) can be implemented using one or more of the following neural networks:

- Multi-Layer Perceptron (MLP). The event voxel grid (130) is represented with a single MLP (MLP-only) or with a model having an MLP followed by a CNN (MLP+CNN).
- Tensor Decomposition. The event voxel grid (130) is represented using a combination of vectors (CP decomposition) or vectors and matrices (VM decomposition) followed by an MLP.
- Hash Encoding. The event voxel grid (130) is represented using multiresolution hash tables of feature vectors followed by an MLP.

In some examples, these neural networks can be trained using gradient descent in an end-to-end manner, e.g., in a manner similar to that of conventional deep learning models. Example neural representations (150) that can be used in the workflow (100) and the corresponding training processes (140) are described in more detail below.

First, the main features of an MLP are briefly discussed. MLPs are typically used where a capability for modeling universal multi-dimensional data or functions is needed. A typical MLP includes a sequence of layers, with each layer being configured to perform a linear (affine) operation followed by a non-linear activation function. Operations performed at the $m$-th layer of the MLP can be represented as follows:

$$y_m = f_m(A_m \cdot x_m + b_m) \quad (8)$$

where $x_m \in \mathbb{R}^{d_{m-1}}$ is the layer input; $y_m \in \mathbb{R}^{d_m}$ is the layer output; $A_m \in \mathbb{R}^{d_m \times d_{m-1}}$ and $b_m \in \mathbb{R}^{d_m}$ are the weight matrix and bias, respectively; $d_{m-1}$ and $d_m$ are the input and output dimensions, respectively; and $f_m$ is the activation function. In various examples, the activation functions can be implemented using a ReLU function, a LeakyReLU, a sigmoid function, and the like. The output from the $m$-th layer is sent to the ($m$ + 1)-th layer, and so on.

To improve the capability of modeling nonlinearity and high-frequency components in the data, positional encoding (PE) can be used to map the input to a higher dimensional space. In one example, the positional encoding is the sinusoidal positional encoding:

$$\gamma(x) = (\sin(2^0 \pi x), \cos(2^0 \pi x), ..., \sin(2^{L-1} \pi x), \cos(2^{L-1} \pi x)) \quad (9)$$

where $L$ is the number of frequencies. In some examples described herein, $L$ is set to 10, but other values of $L$ may be chosen. Note that the positional encoding is an elementwise operation and, from each element, $L$ of sine and $L$ of cosine components are generated, resulting in a total of $2L$ elements. Therefore, for $x \in \mathbb{R}^d$, the positional encoding produces $\gamma(x) \in \mathbb{R}^{2Ld}$.

Herein, an M-layer MLP operation is denoted as:

$$\hat{y} = \Phi(x) \quad (10)$$

where $x \in \mathbb{R}^{d_{in}}$ is the input to the MLP $\Phi$, and $\hat{y} \in \mathbb{R}^{d_{out}}$ is the output of the MLP. $d_{in} = d_0$ is the input dimension, and $d_{out} = d_M$ is the output dimension, respectively. Besides, $m = 1, ..., M - 1$ are referred to as hidden layers, and $d_m, m = 1, ..., M - 1$ as the hidden-layer dimensions. The $M$-th layer, i.e., the last layer, may also be referred to as the output layer.

FIG. 3 is a block diagram illustrating a testing workflow (300) corresponding to the neural representation (150) according to one example. In the example shown, the neural representation (150) is implemented using an MLP (315). To model the event voxel grid V *(130),* the MLP (315) is trained and configured to perform voxel-wise prediction. More specifically, for each voxel, the MLP (315) takes the respective voxel grid coordinates (310) (which have space and time components, e.g., in the vector form $(t, y, x)$) as the input and outputs a corresponding predicted voxel value (320), $\hat{V}(t, y, x)$. In mathematical terms, this operation can be expressed as follows:

$$\hat{V}(t, y, x) = \Phi(t, y, x) \quad (11)$$

In other words, the MLP (315) is trained to model a function that generates a voxel value for each coordinate. The input dimension of the MLP (315), denoted as $\Phi$, is $d_{in} = 3$. The output dimension is $d_{out} = 1$ when a scalar grid is used and $d_{out} = 2$ when a two-channel grid is used. Without any implied limitations, example MLP (315) structures described below correspond to $d_{out} = 1$. Based on the provided description, a person of ordinary skill in the art will be able to make and use various MLP structures corresponding to $d_{out} = 2$ without any undue experimentation.

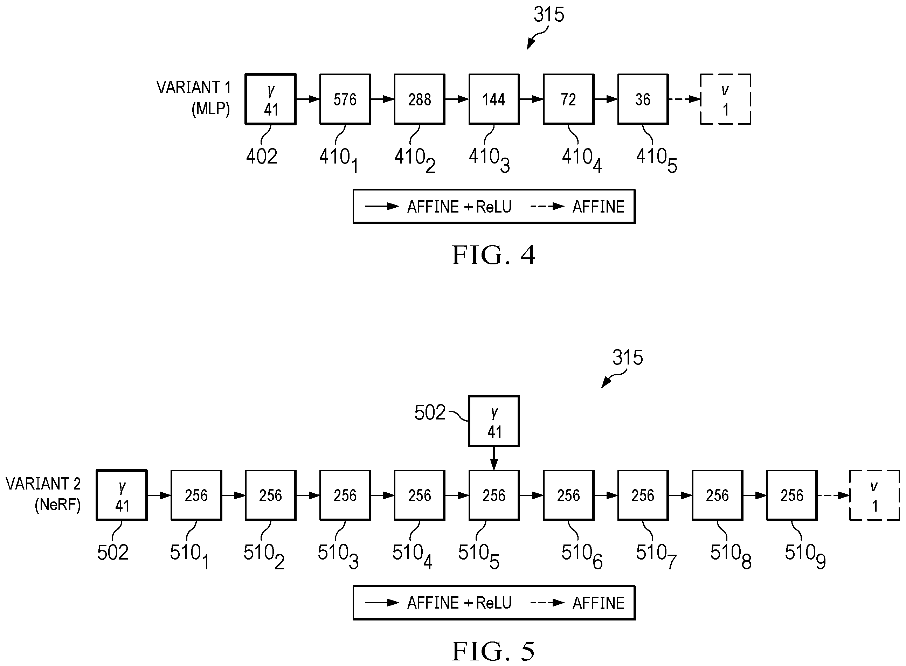

FIGS. 4-7 are block diagrams illustrating several variants of the MLP (315) according to some examples. In the shown block diagrams, the number in each block indicates the respective output dimension of the corresponding MLP layer. In these examples, all layers use the ReLU activation function except for the output layer, where no activation function is used. Each of the shown MLP variants has a different respective number of layers. Some of the variants have skip connections. For each of the variants, the positional encoding $\gamma$ (also see Eq. (9)) is applied on x and y only because the event voxel grid size in the temporal dimension $T$ is relatively small (e.g., $T$ = 29) in these specific examples. However, for event data resulting in a relatively large event voxel grid size $T$, positional encoding $\gamma$ can be applied on $t$ as well.

In the Variant 1 model of FIG. 4, the MLP (315) has five hidden layers ($410_1$-$410_5$). The dimensions of the hidden layers ($410_1$-$410_5$) are given by the dimension vector (576,288,144,72,36). The positional encoding $\gamma$ with $L$ = 10 is applied on the inputs x and y only while t remains untouched, resulting a 41-dimensional vector (402). The ReLU activation function is applied for the hidden layers ($410_1$-$410_4$) but not for the fifth hidden layer ($410_5$).

In the Variant 2 model of FIG. 5, the MLP (315) has nine hidden layers ($510_1$-$510_9$) of the equal dimension 256. The positional encoding $\gamma$ with $L$ = 10 is applied on the inputs x and y only while t remains untouched, resulting a 41-dimensional vector (502). The vector (502) is applied to the input layer ($510_1$), and a copy of the vector (502) is applied as a skip connection the 5-th layer ($510_5$). The skip connection of positional encoding to an intermediate hidden layer can be beneficial, e.g., in terms of better modeling the high-frequency components of the corresponding event voxel grid (130).

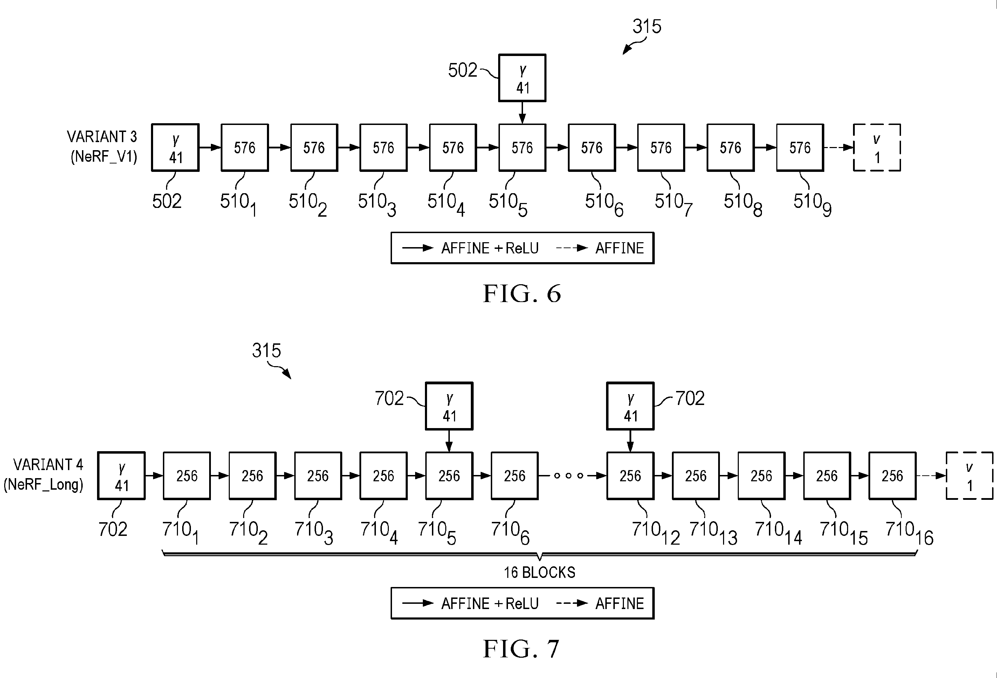

In the Variant 3 model of FIG. 6, the MLP (315) is similar to that of the Variant 2 model of FIG. 5, except that the dimensions of the layers ($510_1$-$510_9$) are increased from 256 to 576. The increased dimensions may be beneficial as they generally tend to improve the accuracy of the prediction results at the cost of higher computational complexity.

In the Variant 4 model of FIG. 7, the MLP (315) has sixteen hidden layers ($710_1$-$710_{16}$) of the equal dimension 256. The positional encoding y with $L = 10$ is applied on the inputs $x$ and $y$ only while $t$ remains untouched, resulting a 41-dimensional vector (702). The vector (702) is applied to the input layer ($710_1$), and copies of the vector (702) are applied as skip connections to the 5-th layer ($710_5$) and the 12-th layer ($710_{12}$). The additional skip connection(s) of positional encoding layer can be beneficial, e.g., in terms of better modeling the high-frequency components of the corresponding event voxel grid (130).

Table 1 illustrates relative performance of the Variants 1-4 of the MLP (315) according to one example. More specifically, Table 1 shows the mean absolute error (MAE) and the mean square error (MSE) of each variant in the second and third columns, respectively. The fourth column lists the total number of parameters (in millions) for each variant. One can see from the data presented in Table 1 that the more parameters the model has (larger model), the lower MAE and MSE the model can achieve (at the cost of higher complexity).

**Table 1:** Relative Prediction Performance of Variants 1-4 Illustrated in FIGS. 4-7.

| Model | MAE | MSE | # Params (M) |
|---|---|---|---|
| Variant 1 - MLP | 0.06886 | 0.05404 | 0.245089 |
| Variant 2 - NeRF_MLP | 0.0627 | 0.03635 | 0.482049 |
| Variant 3 - NeRF_V1 | 0.02269 | 0.01123 | 2.374849 |
| Variant 4 - NeRF_Long | 0.03494 | 0.01902 | 1.018881 |

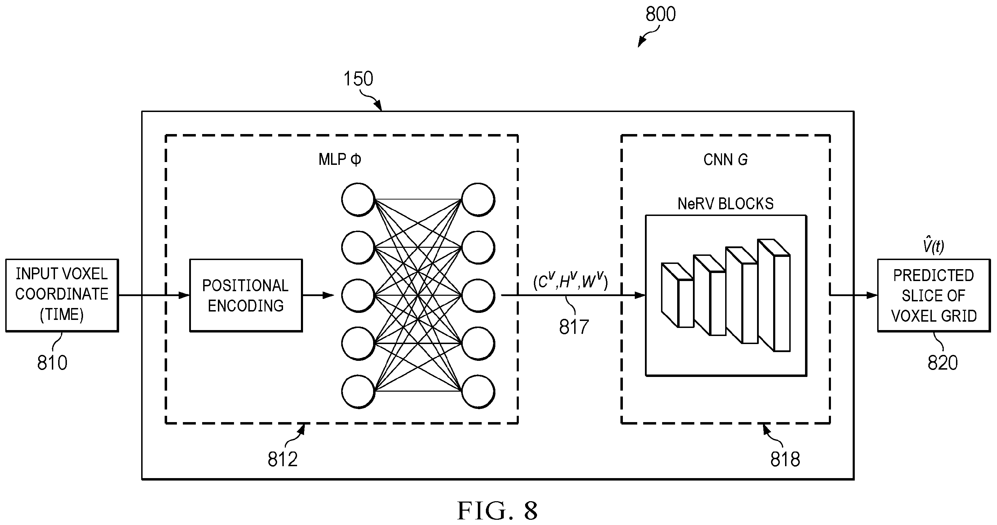

FIG. 8 is a block diagram illustrating a testing workflow (800) corresponding to the neural representation (150) according to another example. In the example shown, the neural representation (150) is implemented using an MLP (815) and a CNN (818). To model the event voxel grid V (130), the serially connected MLP (815) and CNN (818) are trained and configured to perform plane-wise prediction. More specifically, for each temporal plane of the event voxel grid (130), the MLP (815) of the neural representation (150) takes the corresponding time (810) as an input, and the CNN (818) of the neural representation (150) outputs a corresponding predicted slice (820), $\hat{V}(t)$, of the event voxel grid (130). The size of the predicted slice (820) is $H \times W$ voxels.

In mathematical terms, the neural representation (150) shown in FIG. 8 can be expressed as follows:

$$\hat{V}(t) = G\big(\Phi(t)\big) \qquad (12)$$

where $\Phi \colon \mathbb{R}^1 \to \mathbb{R}^{C^V \times H^V \times W^V}$ denotes the MLP (812), and $G$ denotes the CNN (818). In other words, the serially connected MLP and CNN are trained to model a function that generates a plane of voxel values for each time $t$. In operation, the CNN (818) gradually upsamples a ($C^V \times H^V \times W^V$)-sized output (817) from the MLP (812) to the spatial resolution of $H \times W$. Herein, the size ($C^V$, $H^V$, $W^V$) may be referred to as the stem dimension.

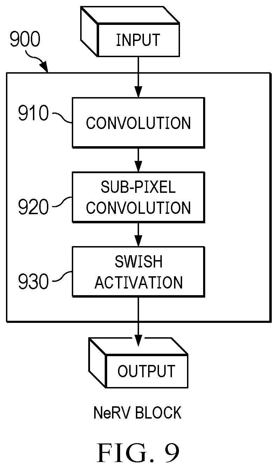

FIG. 9 is a block diagram illustrating a NeRV block (900) used in the CNN (818) according to one example. Herein the acronym "NeRV" stands for neural representation for videos (NeRV). In the example shown in FIG. 8, the CNN (818) includes a plurality of differently sized NeRV blocks (900) that are serially connected. In the example shown in FIG. 9, the NeRV block (900) includes a convolution block (910), a sub-pixel convolution block (920), and a Swish activation block (930). In some examples, implementations of the convolution block (910), the sub-pixel convolution block (920), and the Swish activation block (930) may benefit from certain features described in Chen, Hao, Bo He, Hanyu Wang, Yixuan Ren, Ser Nam Lim, and Abhinav Shrivastava, "Nerv: Neural representations for videos," Advances in Neural Information Processing Systems 34 (2021): pp. 21557-21568, which is incorporated herein by reference in its entirety.

Table 2 provides some characteristics of six variants of the neural representation (150) for the testing workflow (800) according to some examples.

**Table 2:** Characteristics of Variants of the Neural Representation (150) Shown in FIG. 8.

| Variants of NeRV (150) | # Params (M) | MLP (812) (hidden dimension, length) | Stem (817) | Upscale factors for sequence of NeRV blocks (900) in CNN (818) |
|---|---|---|---|---|
| Variant 1 | 0.1926 | (64, 1) | (3, 4, 8) | (5, 2, 2, 2, 2, 2, 1) |
| Variant 2 | 0.6696 | (256, 1) | (3, 4, 8) | (5, 2, 2, 2, 2, 2) |

(continued)

| Variants of NeRV (150) | # Params (M) | MLP (812) (hidden dimension, length) | Stem (817) | Upscale factors for sequence of NeRV blocks (900) in CNN (818) |
|---|---|---|---|---|
| Variant 3 | 0.9176 | (256, 1) | (3, 4, 16) | (5, 2, 2, 2, 2, 2) |
| Variant 4 | 1.1089 | (128, 1) | (3, 4, 6) | (5, 4, 2, 2, 2) |
| Variant 5 | 1.6172 | (512, 1) | (6, 8, 18) | (5, 2, 2, 2, 2) |
| Variant 6 | 1.9265 | (512, 1) | (6, 8, 24) | (5, 2, 2, 2, 2) |

Table 3 illustrates relative performance of the Variants 1-6 listed in Table 2 according to one example. More specifically, Table 3 shows the mean absolute error (MAE) and the mean square error (MSE) of each variant in the second and third columns, respectively. The fourth column lists the total number of parameters (in millions) for each variant. One can see from the data presented in Table 1 that, performance wise, the variants presented in Tables 2-3 follow the same general trend as the variants presented in Table 1. In other words, the prediction quality tends to be better in larger models, in which the MLP dimension and/or the stem dimension are/is higher.

Table 3: Relative Prediction Performance of Variants 1-6 Listed in Table 2.

| Variant # | MAE | MSE | Params (M) |
|---|---|---|---|
| Variant 1 | 0.0604 | 0.034 | 0.1926 |
| Variant 2 | 0.0423 | 0.014 | 0.6696 |
| Variant 3 | 0.0311 | 0.0078 | 0.9176 |
| Variant 4 | 0.024 | 0.0060 | 1.1089 |
| Variant 5 | 0.018 | 0.0055 | 1.6172 |
| Variant 6 | 0.009 | 0.0028 | 1.9265 |

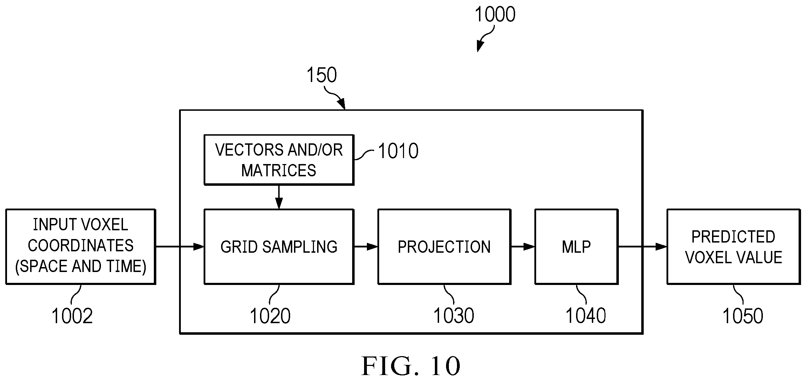

FIG. 10 is a block diagram illustrating a testing workflow (1000) corresponding to the neural representation (150) according to yet another example. In the example shown, the neural representation (150) is implemented using a decomposition selection block (1010), a grid sampling block (1020), a projection block (1030), and an MLP (1040). To model the event voxel grid V (130), the shown neural representation (150) is trained and configured to perform voxel-wise prediction. More specifically, for each voxel, the shown neural representation (150) takes the respective voxel grid coordinates (1002) (which have space and time components, e.g., in the vector form $(t, y, x)$) as the input and outputs a corresponding predicted voxel value (1050). The prediction is made based on tensor decomposition selected with the block (1010). In different examples, different tensor decompositions can be selected. For illustration purposes and without any implied limitations, several examples are described below in reference to the CANDECOMP/PARAFAC (CP) decomposition and the vector-matrix (VM) decomposition.

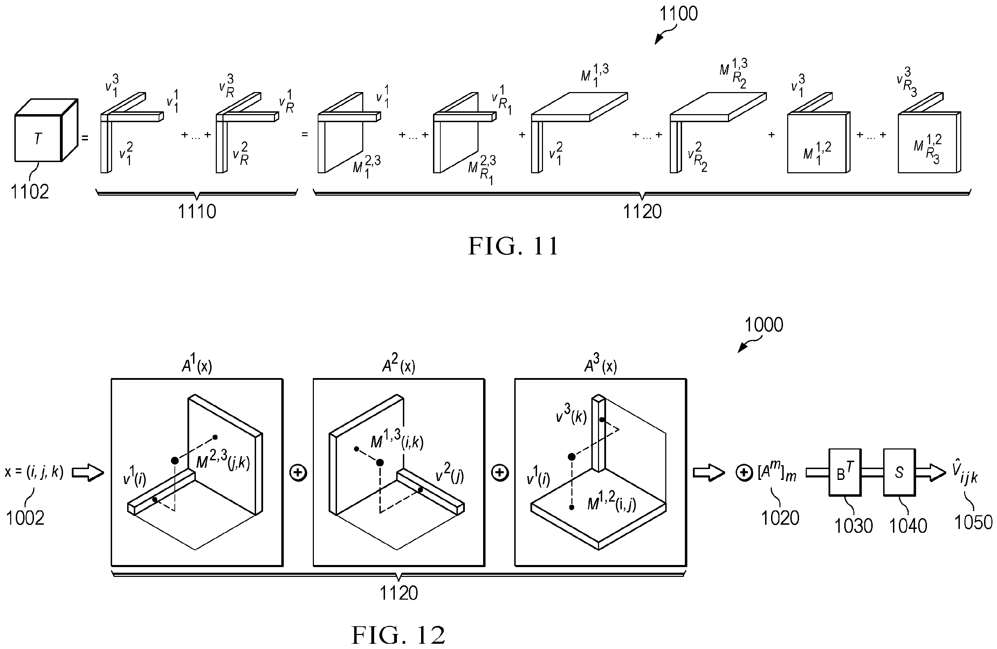

FIG. 11 pictorially illustrates a tensor decomposition (1100) that can be used with the testing workflow (1000) according to some examples. The tensor decomposition (1100) provides two different decompositions of a 3D (3rd-order) tensor (1102), including a CP decomposition (1110) and a VM decomposition (1120). The CP decomposition (1110) and the VM decomposition (1120) are described in more detail below. Some implementations of the tensor decomposition (1100) may benefit from some features described in Chen, Anpei, Zexiang Xu, Andreas Geiger, Jingyi Yu, and Hao Su, "TensoRF: Tensorial radiance fields," European Conference on Computer Vision, pp. 333-350, Cham: Springer Nature Switzerland, 2022, which is incorporated herein by reference in its entirety.

The CP decomposition (1110) factorizes the tensor (1102) into a sum of products of vectors. Given the 3D tensor (1102) $T \in \mathbb{R}^{I \times J \times K}$, the factorization can be performed in accordance with the following equation:

$$T = \sum_{r=1}^{R} v_r^1 \circ v_r^2 \circ v_r^3 \qquad (13)$$

where R is the number of components, and $v_r^1 \in \mathbb{R}^I$, $v_r^2 \in \mathbb{R}^J$ and $v_r^3 \in \mathbb{R}^K$ are vectors for the r-th components in the first, second and third dimensions, respectively. The operator $\circ$ is the outer product. Therefore, for the $(i, j, k)$-th entry:

$$T_{ijk} = \sum_{r=1}^{R} v_{r,i}^1 v_{r,j}^2 v_{r,k}^3 \qquad (14)$$

To facilitate further discussion, the r-th component is denoted as $A_r = v_r^1 \circ v_r^2 \circ v_r^3$.

Since the event voxel grid *V* is highly nonlinear and has a significant amount of high-frequency components, instead of simply predicting the event voxel grid from the decomposed tensor (1010), the neural representation (150) of FIG. 10 is configured to send the decomposed tensor to the linear projection layer (1030) followed by the MLP (1040) to acquire the predicted voxel value (1050). The factorized *P*-dimensional neural feature tensor $G \in \mathbb{R}^{I \times J \times K \times P}$ is first defined. The (*i,j, k*)-th entry in *G* can be calculated as follows:

$$G_{ijk} = B\left( \bigoplus \left[ A_{r,ijk} \right]_r \right) \qquad (15)$$

where $\bigoplus \left[ A_{r,ijk} \right]_r \in \mathbb{R}^R$ is a concatenation of all components $A_{r,ijk}$ for *r* = 1,2, ..., *R*; and $B \in \mathbb{R}^{P \times R}$ is the projection matrix. Then, the final predicted event voxel grid $\hat{V}$ can be acquired by sending the neural feature to the MLP (1040). For illustration purposes and without any implied limitation, let us assume that *G* is in the same spatial resolution as *V*, i.e., *I = T, J = H, K = W*. One can then predict the (*i, j, k*)-*th* voxel (1050) as follows:

$$\hat{V}_{ijk} = S(G_{ijk}) \qquad (16)$$

where *S* represents the MLP (1040) with the positional encoding $\gamma$ described above (e.g., see Eq. (9)). In one example, the MLP (1040) has two hidden layers of dimension 128 configured with ReLU activation. When the corresponding event voxel grid (130) is a scalar grid, the output dimension of *S* is 1. On the other hand, when the corresponding event voxel grid (130) is a two-channel grid, the output dimension of *S* is 2. In some examples, *L* = 6 is used to implement the positional encoding $\gamma$.

Furthermore, because the MLP (1040) can provide high spatial frequency signals, one can define the decomposed vectors v's in a lower resolution (*I ≤ T, J ≤ H, K ≤ W*) to predict the event voxel grid (130) in the original resolution *T × H × W*, thereby beneficially reducing the model size. Mathematically, the component $A_r$ can be represented using the bilinearly upsampled vectors $v_\uparrow$'s as follows:

$$A_r = v_{r,\uparrow}^1 \circ v_{r,\uparrow}^2 \circ v_{r,\uparrow}^3 \qquad (17)$$

$$v_{r,\uparrow}^X = upsample(v_r^X), X = 1,2,3 \qquad (18)$$

In some examples, given the input voxel coordinate (1002), the neural representation (150) of FIG. 10 can be configured to perform the bilinear grid sampling (1020) in v's to estimate the corresponding values in $v_\uparrow$'s without explicitly calculating the entire upsampled vectors $v_\uparrow$'s.

Table 4 illustrates relative performance of several different configurations of the neural representation (150) of FIG. 10 according to one example. The MSE (nonzero) (the second column of Table 4) indicates the MSE of non-zero voxels. The model size given in the third column of Table 4 is relative to the unit of 314,000 parameters. Note that only the spatial resolution (*I,J, K*) of the model is changed and the predicted voxel grid resolution (*T, H, W*) is kept the same for all listed configurations. In Table 4, the symbol "V" represents a checkmark indicating whether positional encoding (PE) in feature or PE in coordinate is used for computing the corresponding entry. When "PE in Feature" is checkmarked, it means that positional encoding is applied on the neural feature. When "PE in Coord." is checkmarked, it means that positional encoding is applied on the voxel coordinate(s).

**Table 4:** Prediction Performance of Example Configurations of Neural Representation (150) Illustrated in FIG. 10

| MSE | MSE (nonzero) | Relative Model Size | Relative Model Spatial Res. | R | PE in Feature | PE in Coord. |
|---|---|---|---|---|---|---|
| 0.01066 | 0.03349 | 1x | 1x | 192 | V | |
| 0.00694 | 0.01647 | 2x | 1x | 384 | V | |

(continued)

| MSE | MSE (nonzero) | Relative Model Size | Relative Model Spatial Res. | R | PE in Feature | PE in Coord. |
|---|---|---|---|---|---|---|
| 0.01198 | 0.04183 | 1/4x | 1/2x | 192 | V | |

The VM decomposition (1120) factorizes a tensor into a sum of vector and matrix products. Given a 3D tensor (1102) $T \in \mathbb{R}^{I \times J \times K}$, the factorization can be performed in accordance with the following equation:

$$T = \sum_{r=1}^{R_1} v_r^1 \circ M_r^{2,3} + \sum_{r=1}^{R_2} v_r^2 \circ M_r^{1,3} + \sum_{r=1}^{R_3} v_r^3 \circ M_r^{1,2} \qquad (19)$$

where $R_1$, $R_2$ and $R_3$ are the numbers of components for mode 1, mode 2 and mode 3, respectively; $v_r^1 \in \mathbb{R}^I$, $v_r^2 \in \mathbb{R}^J$ and $v_r^3 \in \mathbb{R}^K$ are vectors for the r-th components in the first, second and third dimensions, respectively; and $M_r^{2,3} \in \mathbb{R}^{J \times K}$, $M_r^{1,3} \in \mathbb{R}^{I \times K}$ and $M_r^{1,2} \in \mathbb{R}^{I \times J}$ are matrices for the r-th components in the second-third, first-third and first-second dimensions, respectively. The operator $\circ$ is the outer product. In some examples, $R_1 = R_2 = R_3 = R$. For such examples, for the $(i, j, k)$-th entry:

$$T_{ijk} = \sum_{r=1}^R v_{r,i}^1 M_{r,jk}^{2,3} + v_{r,j}^2 M_{r,ik}^{1,3} + v_{r,k}^3 M_{r,ij}^{1,2} \qquad (20)$$

To facilitate further discussion, the r-th component of mode 1, 2 and 3 is denoted as $A_r^1 = v_r^1 \circ M_r^{2,3}$, $A_r^2 = v_r^2 \circ M_r^{1,3}$, and $A_r^3 = v_r^3 \circ M_r^{1,2}$, respectively.

FIG. 12 is a block diagram illustrating additional details of the testing workflow (1000) according to one example. In the example shown, the testing workflow (1000) is configured to use the VM decomposition (1120). In this example, the testing workflow (1000) first calculates the factorized $P$-dimensional neural feature tensor $G \in \mathbb{R}^{I \times J \times K \times P}$ using the VM decomposition (1120). The $(i, j, k)$-th entry in G can be calculated as follows:

$$G_{ijk} = B \left( \bigoplus \left[ A_{r,ijk}^m \right]_{m,r} \right) \qquad (21)$$

were $\bigoplus \left[ A_{r,ijk}^m \right]_{m,r} \in \mathbb{R}^{3R}$ denotes the concatenation (1020) of all components $A_{r,ijk}^m$ for $r = 1, 2, ..., R$ and $m = 1, 2, 3$; and $B \in \mathbb{R}^{P \times 3R}$ denotes the projection matrix (1030). Then, the final predicted event voxel grid $\hat{V}$ can be acquired by sending the neural feature G to the MLP (1040). Assuming that G is in the same spatial resolution as V, i.e., $I = T, J = H, K = W$, the prediction (1050) for the $(i, j, k)$-th voxel (1002) is obtained as follows:

$$\hat{V}_{ijk} = S(G_{ijk}) \qquad (22)$$

where S represents the MLP (1040) with the positional encoding y described above (e.g., see Eq. (9)). In one example, the MLP (1040) has two hidden layers of dimension 128 configured with ReLU activation. When the corresponding event voxel grid (130) is a scalar grid, the output dimension of S is 1. On the other hand, when the corresponding event voxel grid (130) is a two-channel grid, the output dimension of S is 2. In some examples, $L = 6$ is used to implement the positional encoding $\gamma$.

Also, similar to the previous example, the decomposed vectors v's and matrices M's can be defined in a lower resolution ($I \leq T, J \leq H, K \leq W$) to predict the event voxel grid (130) in the original resolution, thereby beneficially reducing the model size. Mathematically, the components $A_r$ can be represented using the bilinearly upsampled vectors $v_\uparrow$'s and $M_\uparrow$'s as follows:

$$A_r^1 = v_{r,\uparrow}^1 \circ M_{r,\uparrow}^{2,3} \qquad (23)$$

$$A_r^2 = v_{r,\uparrow}^2 \circ M_{r,\uparrow}^{1,3} \qquad (24)$$

$$A_r^3 = v_{r,\uparrow}^3 \circ M_{r,\uparrow}^{1,2} \qquad (25)$$

$$v_{r,\uparrow}^X = upsample(v_r^X), X = 1,2,3 \qquad (26)$$

$$M_{r,\uparrow}^{Y,Z} = upsample(M_r^{Y,Z}), (Y,Z) = (2,3),(1,3),(1,2) \qquad (27)$$

In some examples, given the input voxel coordinate (1002), the neural representation (150) of FIG. 10 can be configured to perform bilinear grid sampling in $v$'s and M's to estimate the corresponding values in $v_\uparrow$'s and $M_\uparrow$'s without explicitly calculating the entire upsampled vectors $v_\uparrow$'s and $M_\uparrow$'s.

Table 5 illustrates relative performance of several different configurations of the neural representation (150) illustrated in FIG. 12 according to one example. The MSE (nonzero) (the second column of Table 5) indicates the MSE of non-zero voxels. The model size given in the third column of Table 5 is relative to the unit of $8.27 \times 10^6$ parameters. Note that only the spatial resolution *(I, J, K)* of the model is changed and the predicted voxel grid resolution *(T, H, W)* is kept the same for all listed configurations. In Table 5, the symbol "V" represents a checkmark indicating whether positional encoding (PE) in feature or PE in coordinate is used for computing the corresponding entry. When "PE in Feature" is checkmarked, it means that positional encoding is applied on the neural feature. When "PE in Coord." is checkmarked, it means that positional encoding is applied on the voxel coordinate(s).

**Table** 5: Prediction Performance of Example Configurations of Neural Representation (150) Illustrated in FIG. 12

| MSE | MSE (nonzero) | Relative Model Size | Relative Model Spatial Resolution | *R* | PE in Feature | PE in Coord. |
|---|---|---|---|---|---|---|
| 0.00031 | 0.00054 | 1 | 1 | 24 | V | |
| 0.00307 | 0.00753 | 1/2 | 1 | 12 | V | |
| 0.00809 | 0.02391 | 1/4 | 1 | 6 | V | |
| 0.00021 | 0.00042 | 1 | 1/2 | 96 | | V |
| 0.00228 | 0.00506 | 1/4 | 1/4 | 96 | | V |
| 0.00472 | 0.01037 | 1/8 | 1/8 | 192 | | V |
| 0.00082 | 0.00175 | 1/2 | 1/2 | 48 | | V |
| 0.00290 | 0.00814 | 1/4 | 1/2 | 24 | | V |
| 0.00828 | 0.02782 | 1/16 | 1/4 | 24 | | V |
| 0.00086 | 0.00167 | 1/2 | 1/2 | 48 | V | |
| 0.00173 | 0.00408 | 1/4 | 1/4 | 192 | V | |

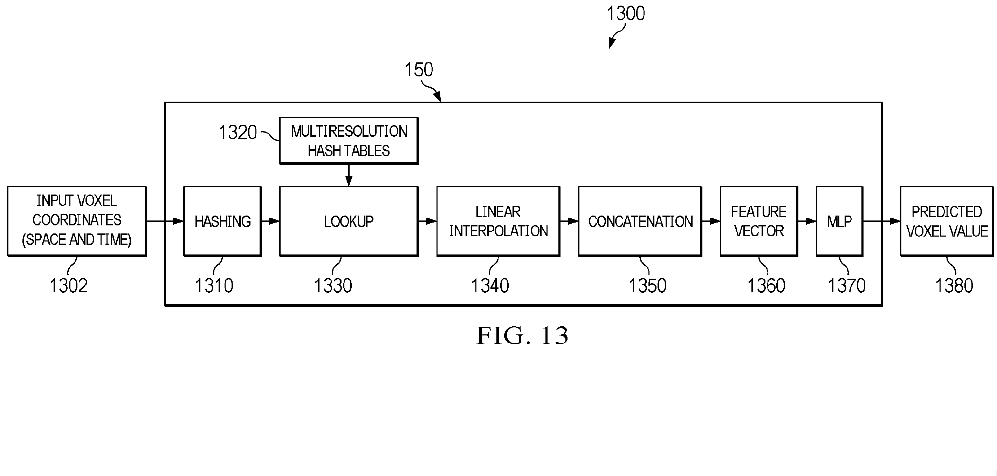

FIG. 13 is a block diagram illustrating a testing workflow (1300) corresponding to the neural representation (150) according to yet another example. In the example shown, the neural representation (150) is implemented using a hashing block (1310), a multiresolution hash tables block (1320), a lookup block (1330), a linear interpolation block (1340), a concatenation block (1350), a feature vector block (1360), and an MLP (1370). To model the event voxel grid *V (130),* the shown neural representation (150) is trained and configured to perform voxel-wise prediction. More specifically, for each voxel, the shown neural representation (150) takes the respective voxel grid coordinates (1302) (which have space and time components, e.g., in the vector form $(t, y, x)$) as the input and outputs a corresponding predicted voxel value (1380). Some implementations of the neural representation (150) illustrated in FIG. 13 can benefit from some features described in Thomas Müller, Alex Evans, Christoph Schied, and Alexander Keller, "Instant neural graphics primitives with a multiresolution hash encoding," ACM transactions on graphics (TOG) 41, no. 4 (2022): pp. 1-15, which is incorporated herein by reference in its entirety.

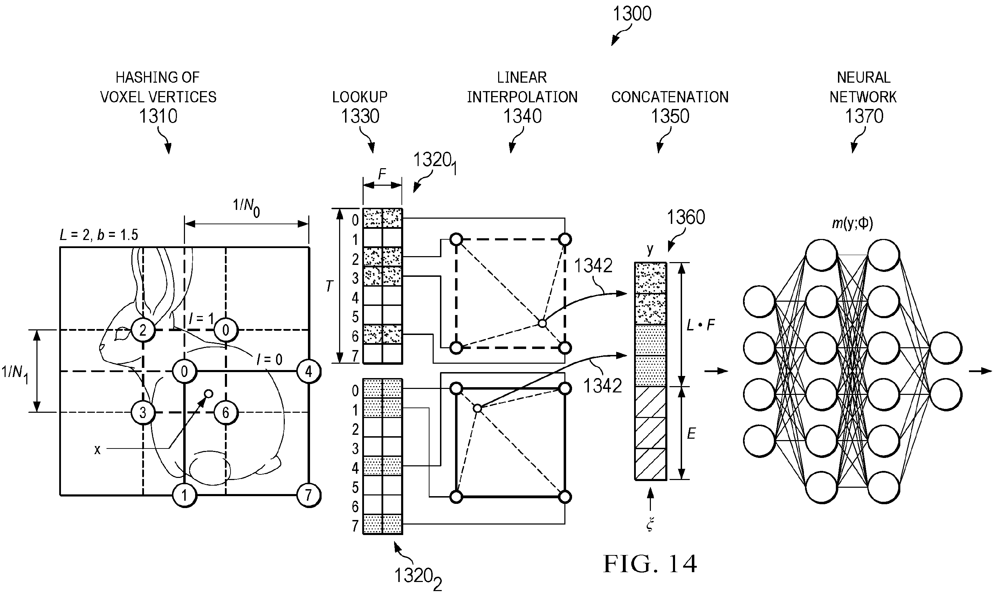

FIG. 14 pictorially illustrates some operations that can be used in the testing workflow (1300) according to some examples. In the example shown, the testing workflow (1300) is configured to use the multiresolution hash encoding in Instant-NGP as a model structure for its high computational efficiency and compact model size, where the acronym NGP stands for "neural graphics primitives." For illustration purposes, the multiresolution hash encoding used in the testing workflow (1300) is shown in FIG. 14 in 2D.

Given the event voxel grid V of resolution $T \times H \times W$, $L$ levels of resolutions are defined in the range of $[N_{min}, N_{max}]$, where the resolution at level $l$ is defined as:

$$N_l = \lfloor N_{min} b^l \rfloor, l = 0,1, ..., L-1 \quad (28)$$

Each level $l$ has $(N_l + 1)^3$ grid points and a hash table containing up to $T_l$ feature vectors with dimensionality $F_l$. In some examples, larger $T_l$ can be used for higher $l$ to avoid the effect of hash collision, but $T_l$ may not grow sub-linearly to the number of grid points $(N_l + 1)^3$. Otherwise, the model size will grow significantly, e.g., more like the explicit grid representation. Empirically, $T_l = T$ and $F_l = F$ are used for all $l$ and the model is allowed to learn to mitigate the effects of hash collisions at higher levels, e.g., as described in the above-cited Miiller publication. For illustration purposes, FIG. 14 explicitly shows only two levels of resolution, with the corresponding tables being labeled $(1320_1)$ and $(1320_2)$, respectively.

In some examples, at level $l$, given the voxel coordinate $(t, y, x)$, the coordinate is first normalized to the [0,1] range. The normalized coordinate $\tilde{x}$ is expressed as follows:

$$\tilde{x} = \left(\frac{t}{T}, \frac{y}{H}, \frac{x}{W}\right) \quad (29)$$

Then, the coordinate is scaled by the resolution $N_l$ to acquire $x_l = \tilde{x} \cdot N_l$ and find the $2^d$ ($d = 3$ in our case) integer vertices $\Omega_l$ around the scaled coordinate by spanning the rounded down and up coordinates:

$$\lfloor x_l \rfloor = \lfloor \tilde{x} \cdot N_l \rfloor \quad (30)$$

$$\lceil x_l \rceil = \lceil \tilde{x} \cdot N_l \rceil \quad (31)$$

The left panel illustrating in FIG. 14 the hashing block (1310) of the workflow (1300) pictorially shows an example of these operations corresponding to $l=0$ and $l=1$.

For each vertex $x = (x_1, x_2, ..., x_d) \in \Omega_l$, the hashing block (1310) is configured to use the spatial hash function $h$ to map it to the feature vectors in the hash tables $(1320_1)$ and $(1320_2)$. Mathematically, the spatial hash function h can be expressed, e.g., as follows:

$$h(x) = \left(\bigoplus_{i=1}^{d} x_i \pi_i\right) \bmod T \quad (32)$$

where $\oplus$ is the bitwise XOR operation and $\pi_i$ are unique large prime numbers. The feature vectors of each vertex are then d-linearly interpolated in the linear interpolation block (1340) according to the relative position of $x_l$ to $\Omega_l$ to acquire the corresponding interpolated feature vector (1342) of level $l$ in $\mathbb{R}^F$. In some examples, for a coarse level, for which the number of grid points is less than $T$, i.e., $(N_l + 1)^3 \leq T$, the testing workflow (1300) is configured to use 1:1 mapping instead of the above-described mapping.

The corresponding feature vectors (1342) from all $L$ levels are orderly concatenated in the concatenation block (1350) to acquire the multiresolution feature vector (1360) $y \in \mathbb{R}^{LF}$, which is then sent to the MLP (1370) $S$ to predict the event voxel grid value $\hat{V}(t, y, x) = S(y)$. When the voxel grid is a scalar grid, the output dimension of $S$ is 1. When the voxel grid is a two-channel grid, the output dimension of $S$ is 2. In some examples, the MLP (1370) has two hidden layers of 64-dimension, with ReLU activation.

Table 6 illustrates relative performance of several different configurations of the neural representation (150) illustrated in FIG. 13 according to one example. The MSE (nonzero) (the second column of Table 6) indicates the MSE of non-zero voxels. The model size given in the third column of Table 6 is relative to the unit of $0.96 \times 10^6$ parameters.

**Table 6:** Prediction Performance of Example Configurations of Neural Representation (150) Illustrated in FIG. 13

| MSE | MSE (nonzero) | Relative Model Size | $\log_2 T$ | $L$ |
|---|---|---|---|---|
| 0.00573 | 0.00833 | 1 | 15 | 16 |

(continued)

| MSE | MSE (nonzero) | Relative Model Size | $\log_2 T$ | L |
|---|---|---|---|---|
| 0.00044 | 0.00053 | 4 | 17 | 16 |
| 0.00065 | 0.00069 | 3.5 | 17 | 14 |
| 0.00095 | 0.00103 | 3 | 17 | 12 |
| 0.00166 | 0.00174 | 2.5 | 17 | 10 |
| 0.00313 | 0.00447 | 2 | 17 | 8 |
| 0.00906 | 0.02684 | 1.5 | 17 | 6 |

In some examples, different embodiments of the neural representation (150) described above can be trained via gradient descent. Gradient descent is a well-known optimization technique used to train neural networks, and will not be described in detail herein. A neural representation (150) is trained for a given event voxel grid. In the described embodiments, the neural representation (150) described above is trained by providing training input comprising coordinates (space and time coordinates, or just time coordinates, depending on the respective embodiment as described above) to the given neural network, applying the neural network to the input to generate a predicted voxel value or set of voxel values corresponding to the input coordinate, and updating the neural network parameters based on a computed gradient of a loss function that computes some measure comparing the predicted voxel value generated by the neural network with the ground truth voxel value corresponding to the given coordinate of the event voxel grid. Various loss functions may be used to compare the neural network predictions to the ground truth event voxel grid values as described below.

Presented hereinbelow are example loss functions and the batch sampling strategy that can be used during such training for at least some use cases. More specifically, the following loss functions are presented without any implied limitations: 1) mean square error (MSE) loss, 2) structural similarity index measure (SSIM) loss, 3) feature loss, and 4) task-specific loss. The MSE loss component is used in all examples described herein, whereas other loss components may be optional.

The mean square error (MSE) loss is sometimes used in image or video prediction models. Herein, the MSE is calculated between the predicted voxel grid $\hat{V}$ and the original (ground truth) voxel grid $V$, with the corresponding MSE loss component $\mathcal{L}_{MSE}$ being expressed as follows:

$$\mathcal{L}_{MSE} = MSE(\hat{V}, V) = \frac{1}{THW} \sum_{t=0}^{T-1} \sum_{h=0}^{H-1} \sum_{w=0}^{W-1} \left( \hat{V}(t, h, w) - V(t, h, w) \right)^2 \qquad (33)$$

Instead of minimizing the MSE loss per-voxel, the SSIM loss can also be minimized between the predicted and the original slices of voxel grid at time $t$, $\hat{V}(t)$ and $V(t)$, respectively, to ensure the spatial structure in the voxel grid is learned by the model. In some examples, the SSIM loss $\mathcal{L}_{SSIM}$ can be defined as follows:

$$\mathcal{L}_{SSIM} = 1 - \frac{1}{T} \sum_{t=0}^{T-1} SSIM\left( \hat{V}(t), V(t) \right) \qquad (34)$$

Note that, in a typical example, the SSIM loss is used for training an embodiment of the neural representation (150) employing the MLP+CNN combination.

In addition to measuring the difference in the event voxel domain, some examples are also configured to measure the difference in the feature domain obtained from a pretrained neural network encoder $\phi$. This feature helps to ensure that the predicted event voxel grid represents a similar feature as the original event voxel grid. Let us assume that the pretrained encoder $\phi$ outputs $K$ feature volumes given an event voxel grid $V$. The $i$-th feature volume is denoted as $\phi_i(V) \in \mathbb{R}^{C_i \times T_i \times H_i \times W_i}$, where $C_i$ is the number of channels and $T_i \times H_i \times W_i$ is the spatial dimension. Thus, the feature loss $L_{feat}$ can be defined as the Euclidean distance between the feature volumes acquired from the event voxel grid $V$ and the predicted event voxel grid $\hat{V}$. The corresponding mathematical expression for $L_{feat}$ is as follows:

$$\mathcal{L}_{feat} = \frac{1}{K} \sum_{i=1}^{K} \frac{1}{C_i T_i H_i W_i} \left\| \phi_i(\hat{V}) - \phi_i(V) \right\|_2^2 \qquad (35)$$

Various examples of the pretrained encoder $\phi$ include but are not limited to an event motion encoder, an autoencoder, and other suitable types of neural-network-based encoders.

In some examples, the loss can also be calculated by measuring the effect of predicted voxel in downstream computer vision tasks. A pretrained model $g$ for a certain computer vision task, such as, for example, video frame interpolation, depth estimation, classification, and the like, is assumed. The event voxel grid $V$ can be sent to the pretrained model $g$ to acquire the output $y = g(V)$. For example, when $g$ is trained for video frame interpolation, the output y will include the corresponding interpolated frames. For illustration purposes and for brevity, other inputs, such as the RGB frames, are omitted in the equation provided below. Given the event voxel grid $V$ and the predicted event voxel grid $\hat{V}$, the model output $y = g(V)$ and $\hat{y} = g(\hat{V})$ can be computed. The task-specific loss using the loss function $L_g$ corresponding to $g$ by treating y as the ground truth and $\hat{y}$ as the prediction. The corresponding mathematical expression is as follows:

$$\mathcal{L}_{task} = L_g(\hat{y}, y) \qquad (36)$$

In this form, the loss function $L_g$ depends on the task for which $g$ is trained. For example, when $g$ is trained for video frame interpolation, y and $\hat{y}$ will be the corresponding interpolated RGB frames, and the loss function $L_g$ can be L1, L2, SSIM loss, or other loss defined to work for RGB images. For another example, when $g$ is trained for classification, y and $\hat{y}$ will be class probabilities, and the loss function $L_g$ can be the cross-entropy loss.

In some examples, some or all of the above-described loss functions can be used in various combinations. In one example, a total loss function, $\mathcal{L}$ , can be defined as the following weighted sum:

$$\mathcal{L} = \mathcal{L}_{MSE} + \lambda_{SSIM}\mathcal{L}_{SSIM} + \lambda_{feat}\mathcal{L}_{feat} + \lambda_{task}\mathcal{L}_{task} \qquad (37)$$

where $\lambda_{SSIM}$, $\lambda_{feat}$, $\lambda_{task}$ are the weighting coefficients selected to be in the range $0 < \lambda_{SSIM}$, $\lambda_{feat}$, $\lambda_{task} < 1$.

It should be noted that in all the above example loss functions, whether computed as a direct function of the event voxel grid V and the predicted event voxel grid $\hat{V}$ (for example, MSE loss above), or as a function of a downstream output, such as the interpolated RGB frames $y$, $\hat{y}$ for a task-specific loss for the task of video frame interpolation, the loss function provides a direct or indirect measure of difference between the predicted voxel grid and the ground truth voxel grid, based on which the neural representation is trained.

In various examples (with a possible exception for the MLP+CNN embodiment), during training, voxels are randomly sampled with the batch size $B$. Optionally, instead of sampling all voxels with equal probability, the non-zero voxels are sampled with a higher probability than the zero voxels, because the non-zero voxels come from actual events and are arguably more important for computer vision tasks than zero voxels. In such examples, in each batch, $rB$ samples are randomly sampled from the non-zero voxels $\mathcal{V}_{nonzero}$ , while the rest of $(1 - r)B$ samples are selected from all possible voxels $\mathcal{V}$ , with the sampling rate $r$ being in the interval $r \in [0,1]$. In some examples, the sampling rate $r$ is set to $r = 0.5$, e.g., for training tensor decomposition and hash encoding representations. The corresponding definitions of V and $\mathcal{V}_{nonzero}$ are as follows:

$$\mathcal{V} = \{(t, y, x) | t = 0, ..., T - 1, y = 0, ..., H - 1, x = 0, ..., W - 1\} \qquad (38)$$

$$\mathcal{V}_{nonzero} = \{(t, y, x) | t = 0, ..., T - 1, y = 0, ..., H - 1, x = 0, ..., W - 1, V(t, y, x) \neq 0\} \qquad (39)$$

In some examples, for a CNN+MLP embodiment, times are randomly sampled with batch size $B$. Following an idea similar to that used for the above-described sampling strategy, times with more events are assumed to be more important and can be sampled at a higher probability. For example, the probability of the time $t$ being sampled based on the event amount $|V(t)|_1$ can be calculated as follows:

$$p(t) \propto 1 + c \cdot |V(t)|_1 \qquad (40)$$

where $c$ is a constant to control the increase in probability. Note that other probability formulations such that $p(t)$ increases with the amounts of events may also be applied. For example, one of such formulations can be $p(t) \propto \max(\log(|V(t)|_1), c), c > 0$.

FIG. 15 graphically illustrates the quality-size tradeoffs that can be realized using various embodiments of the neural representation (150) according to some examples. From the shown examples, one can see that an MLP+CNN model is relatively more effective than an MLP-only model. A CP decomposition model can achieve a relatively small model size, but the prediction quality is also limited. A VM decomposition model can provide a relatively high quality of prediction at the cost of a larger model size. A hash encoding (INGP) method can achieve a relatively low prediction error with a relatively small model size, with the corresponding performance being similar to that of the MLP+CNN model. Overall, the examples shown in FIG. 15 indicate that, for a smaller model size, a tensor decomposition representation can achieve a smaller MSE. On the other hand, for a larger model size, an MLP+CNN or hash encoding representation can provide a relatively better performance. It should also be noted that the scale of the abscissa in the graph shown in FIG. 15 can be directly related to the rate of data compression achievable with various embodiments of the neural representation (150) for transmission of the of the event-camera data (110) through a bandwidth-limited communication channel.

In addition to evaluating the predicted event voxel grid by MSE, one can also evaluate it by its effect on the downstream computer vision tasks, such as video frame interpolation, image enhancement, 3D reconstruction, etc. For example, one can compare the results of a downstream task using the original event voxel grid and the predicted event voxel grid. If the predicted event voxel grid provides a similar or better result, then one can conclude that the representation learns well the most important (to the task) features of the event voxel grid.

In one example, a state-of-the-art video frame interpolation model, Time Lens, is chosen for evaluation. For illustration purposes, the hash encoding model is used as the event voxel grid representation. To understand the effect of the quality of the predicted event voxel grid and model size on the video frame interpolation, different model configurations of hash table size $T \in \{2^8, 2^{12}, 2^{16}, 2^{20}\}$ and number of levels $L \in \{8, 12, 16, 20\}$ are examined.

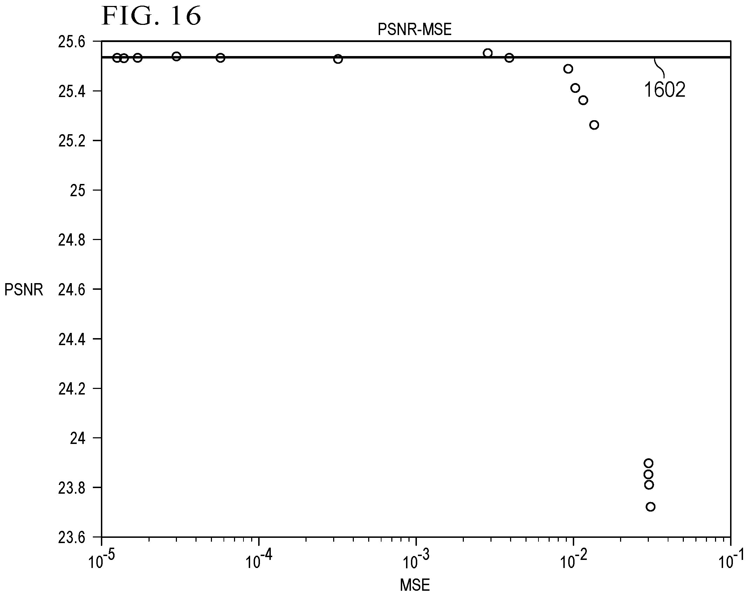

FIG. 16 graphically illustrates the relation between peak signal-to-noise ratio (PSNR) of interpolated frames and the MSE of the predicted event voxel grid for different model configurations according to some examples. In the shown graph, a horizontal line (1602) indicates the PSNR level achieved using the original event voxel grid. The various data points illustrate the PSNR levels achieved using hash encoding models of that event voxel grid. From the shown evaluation data, one can see that, when the MSE is larger than 0.01, the PSNR starts to drop rapidly. On the other hand, when the MSE is smaller than 0.01, the PSNR is saturated to be at the same level (1602) as that of the original event voxel grid.

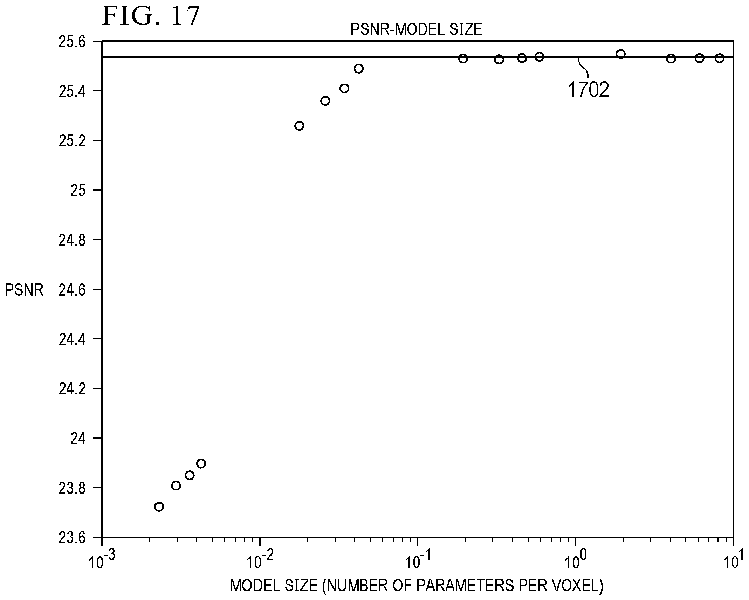

FIG. 17 graphically illustrates the relation between the PSNR of interpolated frames and the model size for different model configurations according to some examples. In the shown graph, a horizontal line (1702) indicates the PSNR level achieved using the original event voxel grid. The various data points illustrate the PSNR levels achieved using hash encoding models of that event voxel grid. From the shown evaluation data, one can see that, when the model size is smaller than 0.1 parameters/voxel, the PSNR starts to drop rapidly. On the other hand, when the model size is larger than 0.1 parameters/voxel, the PSNR is saturated to be at the same level (1702) as that of the original event voxel grid.

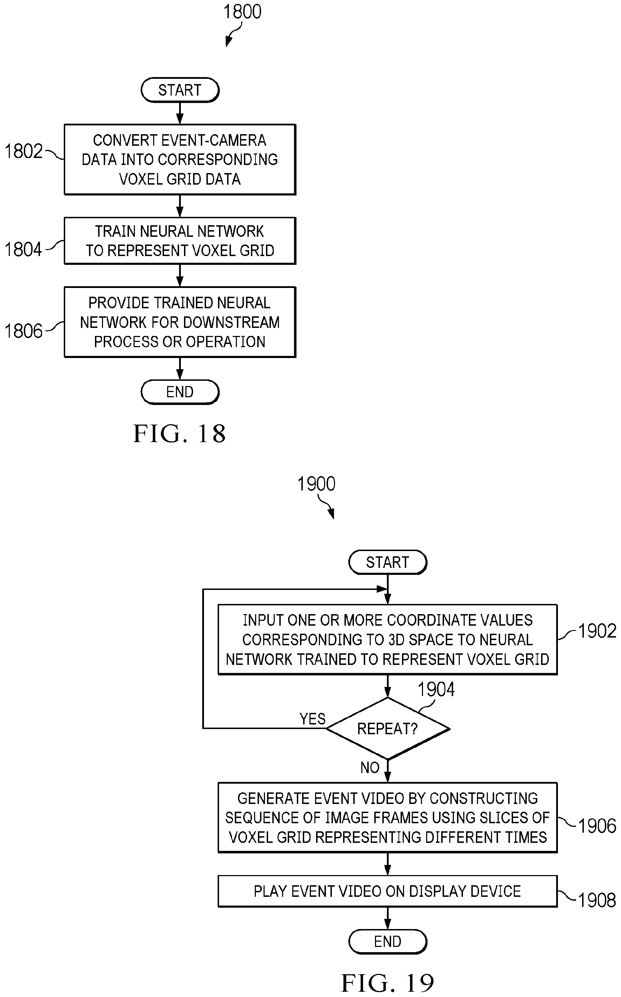

FIG. 18 is a flowchart illustrating a method (1800) of representing event-camera data according to some examples. Various embodiments of the method (1800) can be implemented using one of more of the workflows (100, 300, 800, 1000, 1300).

A block (1802) of the method (1800) includes converting a set of the event-camera data (110) into a corresponding set of voxel grid data (130) for a voxel grid in a three-dimensional (3D) space in which first and second dimensions correspond to first and second spatial coordinates of an image frame, and a third dimension corresponds to time. In some examples, the set of event-camera data includes a list of events. Each of the events is characterized by a respective pair of pixel coordinates in the image frame and a respective event time. Each of the events may further be characterized by a respective event polarity. A zero value of a voxel in the voxel grid indicates "no event."

In one example, operations of the block (1802) include applying one or more preprocessing operations to the set of event-camera data. In some examples, the one or more preprocessing operations include weighted accumulation configured to accumulate two or more events from the list of events into a corresponding single voxel in the voxel grid. In some examples, the one or more preprocessing operations further include normalization of accumulated voxel values based on a grid size of the voxel grid.

A block (1804) of the method (1800) includes training a neural network to represent the voxel grid populated in the block (1802). In some examples, the neural network is configured to output a corresponding predicted voxel value in response to a received input specifying a set of coordinate values in the 3D space. In some other examples, the neural network is configured to output predicted values for a corresponding slice of voxels of the voxel grid in response to a received input specifying a value of the time. In various examples, the neural network is selected from the group consisting of a multilayer perceptron (MLP); a convolutional neural network (CNN) serially connected with an MLP; a tensor-decomposition neural network; and a hash-encoding neural network.

In some examples, the neural network trained in the block (1804) comprises a multilayer perceptron (MLP). In some examples, the MLP has a selectable number of serially connected layers. An activation function for a layer is selectable from a plurality of activation functions. In some examples, the first and second coordinates are positionally encoded prior to being applied to the MLP. In some examples, at least two different ones of the serially connected layers are configured to receive respective copies of the positionally encoded first and second coordinates as inputs.

In some examples, an input specifying a set of coordinate values in the 3D space is subjected to tensor decomposition into a sum of products. The neural network further comprises a linear projection layer connected to feed the MLP and configured to convert the sum of products into a feature vector. The MLP is configured to output a corresponding predicted voxel value in response to the feature vector. In some examples, the tensor decomposition is configured to factorize the input into a sum of vectors products, with each of the vector products being computed using three respective vectors. In some other examples, the tensor decomposition is configured to factorize the input into a sum of vector-matrix products, with each of the vector-matrix products being computed using a respective matrix and a respective vector.

In some examples, an input specifying a set of coordinate values in the 3D space is subjected to hash encoding using a plurality of hash tables of different respective resolutions and is further subjected to interpolation to generate a corresponding plurality of interpolated hash vectors. The corresponding plurality of interpolated hash vectors is concatenated to generate a feature vector. The MLP is configured to output a corresponding predicted voxel value in response to the feature vector.

In some examples, the training of the block (1804) is performed via gradient descent using an applied loss function constructed based on one or more primary loss functions selected from the group consisting of: mean square error (MSE) loss; structural similarity index measure (SSIM) loss; feature loss; and task-specific loss. In some examples, the applied loss function is a weighted sum of two or more of the primary loss functions (e.g., see Eq. (37)).

An optional block (1806) of the method (1800) includes providing the trained neural network obtained in the block (1804) for downstream processes and/or operations. In various examples, such downstream operations may include one or more of the following: (i) compressing the event-camera data (110) for transmission through a bandwidth-limited communication channel; (ii) using the neural representation (150) for various generative machine-learning tasks; and (iii) using the neural representation (150) for one or more computer vision tasks. In some examples, such computer vision tasks may include one or more of video frame interpolation, depth estimation, object classification, image enhancement, 3D reconstruction, etc.

FIG. 19 is a flowchart illustrating a method (1900) of predicting event-camera data according to some examples. Various embodiments of the method (1800) can be implemented using one of more of the workflows (100, 300, 800, 1000, 1300).

A block (1902) of the method (1900) includes inputting one or more coordinate values corresponding to a three-dimensional (3D) space to a neural network trained to represent a voxel grid. First and second dimensions of the 3D space correspond to first and second spatial coordinates of an image frame corresponding to the event-camera data. A third dimension of the 3D space corresponds to time. In some examples, the set of event-camera data includes a list of events. Each of the events is characterized by a respective pair of pixel coordinates in the image frame and a respective event time. Each of the events may further be characterized by a respective event polarity. A zero value of a voxel in the voxel grid indicates "no event."

In some examples, the neural network is configured to output a corresponding predicted voxel value in response to a set of three coordinate values in the 3D space. In some other examples, the neural network is configured to output predicted values for a corresponding slice of voxels of the voxel grid in response to a received input specifying a value of the time. In various examples, the neural network is selected from the group consisting of a multilayer perceptron (MLP); a convolutional neural network (CNN) serially connected with an MLP; a tensor-decomposition neural network; and a hash-encoding neural network.

In some examples, the neural network used in the block (1902) comprises a multilayer perceptron (MLP). In some examples, the first and second coordinates are positionally encoded prior to being applied to the MLP. In some examples, at least two different ones of the serially connected layers are configured to receive respective copies of the positionally encoded first and second coordinates as inputs.

In some examples, an input specifying a set of coordinate values in the 3D space is subjected to tensor decomposition into a sum of products. The neural network further comprises a linear projection layer connected to feed the MLP and configured to convert the sum of products into a feature vector. The MLP is configured to output a corresponding predicted voxel value in response to the feature vector. In some examples, the tensor decomposition is configured to factorize the input into a sum of vectors products, with each of the vector products being computed using three respective vectors. In some other examples, the tensor decomposition is configured to factorize the input into a sum of vector-matrix products, with each of the vector-matrix products being computed using a respective matrix and a respective vector.

In some examples, an input specifying a set of coordinate values in the 3D space is subjected to hash encoding using a plurality of hash tables of different respective resolutions and is further subjected to interpolation to generate a corresponding plurality of interpolated hash vectors. The corresponding plurality of interpolated hash vectors is concatenated to generate a feature vector. The MLP is configured to output a corresponding predicted voxel value in response to the feature vector.

In a decision block (1904) of the method (1900), it is determined whether to repeat operations of the block (1902) with a different input set of coordinate values. In some examples, a decision not to repeat ("No" at the decision block (1904)) is reached when the voxel grid has been sufficiently sampled in the previous instances of the block (1902). After the decision not to repeat is reached, the processing of the method (1900) is directed to a block (1906). Otherwise ("Yes" at the decision block (1904)), the processing of the method (1900) is looped back to the block (1902).

Operations of the block (1906) include generating an event video by constructing a sequence of image frames using the slices of the voxel grid representing different values of the time. As indicated above, a sufficient number of samples of the predicted event-camera data is previously obtained by repeating operations of the block (1902), wherein different sets of coordinate values are repeatedly inputted to the neural network. The sufficient number of samples is such that a good-quality sequence of image frames can be generated in the block (1906).

An optional block (1908) of the method (1900) includes playing the event video generated in the block (1906) on a display device.

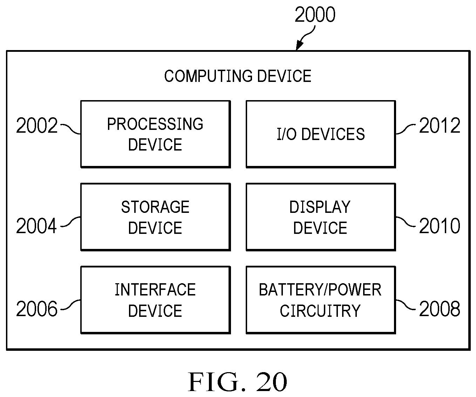

FIG. 20 is a block diagram of an example computing device (2000), one or more instances of which can be used to implement various ones of the above-described workflows and methods, according to some examples. The computing device (2000) of FIG. 20 is illustrated as having a number of components, but any one or more of these components may be omitted or duplicated, as suitable for the application and setting. In some embodiments, some or all of the components included in the computing device (2000) may be attached to one or more motherboards and enclosed in a housing. In some embodiments, some of those components may be fabricated onto a single system-on-a-chip (SoC) (e.g., the SoC may include one or more electronic processing devices (2002) and one or more storage devices (2004)). Additionally, in various embodiments, the computing device (2000) may not include one or more of the components illustrated in FIG. 20, but may include interface circuitry for coupling to the one or more components using any suitable interface (e.g., a Universal Serial Bus (USB) interface, a High-Definition Multimedia Interface (HDMI) interface, a Controller Area Network (CAN) interface, a Serial Peripheral Interface (SPI) interface, an Ethernet interface, a wireless interface, or any other appropriate interface). For example, the computing device (2000) may not include a display device (2010), but may include display device interface circuitry (e.g., a connector and driver circuitry) to which an external display device (2010) may be coupled.

The computing device (2000) includes a processing device (2002) (e.g., one or more processing devices). As used herein, the terms "electronic processor device" and "processing device" interchangeably refer to any device or portion of a device that processes electronic data from registers and/or memory to transform that electronic data into other electronic data that may be stored in registers and/or memory. In various embodiments, the processing device (2002) may include one or more digital signal processors (DSPs), application-specific integrated circuits (ASICs), central processing units (CPUs), graphics processing units (GPUs), server processors, or any other suitable processing devices.

The computing device (2000) also includes a storage device (2004) (e.g., one or more storage devices). In various embodiments, the storage device (2004) may include one or more memory devices, such as random-access memory (RAM) devices (e.g., static RAM (SRAM) devices, magnetic RAM (MRAM) devices, dynamic RAM (DRAM) devices, resistive RAM (RRAM) devices, or conductive-bridging RAM (CBRAM) devices), hard drive-based memory devices, solid-state memory devices, networked drives, cloud drives, or any combination of memory devices. In some embodiments, the storage device (2004) may include memory that shares a die with the processing device (2002). In such an embodiment, the memory may be used as cache memory and include embedded dynamic random-access memory (eDRAM) or spin transfer torque magnetic random-access memory (STT-MRAM), for example. In some embodiments, the storage device (2004) may include non-transitory computer readable media having instructions thereon that, when executed by one or more processing devices (e.g., the processing device (2002)), cause the computing device (2000) to perform any appropriate ones of the methods disclosed herein below or portions of such methods.

The computing device (2000) further includes an interface device (2006) (e.g., one or more interface devices (2006)). In various embodiments, the interface device (2006) may include one or more communication chips, connectors, and/or other hardware and software to govern communications between the computing device (2000) and other computing devices. For example, the interface device (2006) may include circuitry for managing wireless communications for the transfer of data to and from the computing device (2000). The term "wireless" and its derivatives may be used to describe circuits, devices, systems, methods, techniques, communications channels, etc., that may communicate data via modulated electromagnetic radiation through a nonsolid medium. The term does not imply that the associated devices do not contain any wires, although in some embodiments they might not. Circuitry included in the interface device (2006) for managing wireless communications may implement any of a number of wireless standards or protocols, including but not limited to Institute for Electrical and Electronic Engineers (IEEE) standards including Wi-Fi (IEEE 802.11 family), IEEE 802.16 standards, Long-Term Evolution (LTE) project along with any amendments, updates, and/or revisions (e.g., advanced LTE project, ultramobile broadband (UMB) project (also referred to as "3GPP2"), etc.). In some embodiments, circuitry included in the interface device (2006 for managing wireless communications may operate in accordance with a Global System for Mobile Communication (GSM), General Packet Radio Service (GPRS), Universal Mobile Telecommunications System (UMTS), High Speed Packet Access (HSPA), Evolved HSPA (E-HSPA), or LTE network. In some embodiments, circuitry included in the interface device (2006 for managing wireless communications may operate in accordance with Enhanced Data for GSM Evolution (EDGE), GSM EDGE Radio Access Network (GERAN), Universal Terrestrial Radio Access Network (UTRAN), or Evolved UTRAN (E-UTRAN). In some embodiments, circuitry included in the interface device (2006 for managing wireless communications may operate in accordance with Code Division Multiple Access (CDMA), Time Division Multiple Access (TDMA), Digital Enhanced Cordless Telecommunications (DECT), Evolution-Data Optimized (EV-DO), and derivatives thereof, as well as any other wireless protocols that are designated as 3G, 4G, 5G, and beyond. In some embodiments, the interface device (2006 may include one or more antennas (e.g., one or more antenna arrays) configured to receive and/or transmit wireless signals.

In some embodiments, the interface device (2006) may include circuitry for managing wired communications, such as electrical, optical, or any other suitable communication protocols. For example, the interface device (2006) may include circuitry to support communications in accordance with Ethernet technologies. In some embodiments, the interface device (2006) may support both wireless and wired communication, and/or may support multiple wired communication protocols and/or multiple wireless communication protocols. For example, a first set of circuitry of the interface device (2006) may be dedicated to shorter-range wireless communications such as Wi-Fi or Bluetooth, and a second set of circuitry of the interface device (2006) may be dedicated to longer-range wireless communications such as global positioning system (GPS), EDGE, GPRS, CDMA, WiMAX, LTE, EV-DO, or others. In some other embodiments, a first set of circuitry of the interface device (2006) may be dedicated to wireless communications, and a second set of circuitry of the interface device (2006) may be dedicated to wired communications.

The computing device (2000) also includes battery/power circuitry (2008). In various embodiments, the battery/-power circuitry (2008) may include one or more energy storage devices (e.g., batteries or capacitors) and/or circuitry for coupling components of the computing device (2000) to an energy source separate from the computing device (2000) (e.g., to AC line power).

The computing device (2000) also includes a display device (2010) (e.g., one or multiple individual display devices). In various embodiments, the display device (2010) may include any visual indicators, such as a heads-up display, a computer monitor, a projector, a touchscreen display, a liquid crystal display (LCD), a light-emitting diode display, or a flat panel display.

The computing device (2000) also includes additional input/output (I/O) devices (2012). In various embodiments, the I/O devices (2012) may include one or more data/signal transfer interfaces, audio I/O devices (e.g., microphones or microphone arrays, speakers, headsets, earbuds, alarms, etc.), audio codecs, video codecs, printers, sensors (e.g., thermocouples or other temperature sensors, humidity sensors, pressure sensors, vibration sensors, etc.), image capture devices (e.g., one or more cameras), human interface devices (e.g., keyboards, cursor control devices, such as a mouse, a stylus, a trackball, or a touchpad), etc.

Depending on the specific embodiment, various components of the interface devices (2006) and/or I/O devices (2012) can be configured to output suitable control signals, receive suitable control/telemetry signals, and receive and transmit data streams. In some examples, the interface devices (2006) and/or I/O devices (2012) include one or more analog-to-digital converters (ADCs) for transforming received analog signals into a digital form suitable for operations performed by the processing device (2002) and/or the storage device (2004). In some additional examples, the interface devices (2006) and/or I/O devices (2012) include one or more digital-to-analog converters (DACs) for transforming digital signals provided by the processing device (2002) and/or the storage device (2004) into an analog form suitable for being transmitted through a communication channel.

According to an example embodiment disclosed above, e.g., in the summary section and/or in reference to any one or any combination of some or all of FIGS. 1-20, provided is an apparatus for representing event-camera data, the apparatus comprising: at least one processor; and at least one memory including program code, wherein the at least one memory and the program code are configured to, with the at least one processor, cause the apparatus at least to: convert a set of the event-camera data into a corresponding set of voxel data for a voxel grid in a three-dimensional (3D) space in which first and second dimensions correspond to first and second spatial coordinates of an image frame, and a third dimension corresponds to time; and train a neural network to represent the voxel grid.

According to another example embodiment disclosed above, e.g., in the summary section and/or in reference to any one or any combination of some or all of FIGS. 1-20, provided is an apparatus for predicting event-camera data, the apparatus comprising: at least one processor; and at least one memory including program code, wherein the at least one memory and the program code are configured to, with the at least one processor, cause the apparatus at least to: input one or more coordinate values corresponding to a three-dimensional (3D) space to a neural network trained to represent a voxel grid, wherein first and second dimensions of the 3D space correspond to first and second spatial coordinates of an image frame corresponding to the event-camera data, and a third dimension of the 3D space corresponds to time; and wherein the voxel grid in the 3D space is generated by converting a set of the event-camera data into a corresponding set of voxel data for the 3D space.

In some embodiments of the above apparatus, the at least one memory and the program code are further configured to, with the at least one processor, cause the apparatus to: repeatedly sample the voxel grid at different values of the time by inputting different sets of coordinate values to the neural network; generate an event video by constructing a sequence of image frames using the samples of the voxel grid representing said different values of the time; and play the event video on a display device.

According to yet another example embodiment disclosed above, e.g., in the summary section and/or in reference to any one or any combination of some or all of FIGS. 1-20, provided is a method of representing event-camera data comprising: converting a set of the event-camera data into a corresponding set of voxel data for a voxel grid in a three-dimensional (3D) space in which first and second dimensions correspond to first and second spatial coordinates of an image frame, and a third dimension corresponds to time; and training a neural network to represent the voxel grid.

In some embodiments of the above method, the set of event-camera data includes a list of events, with each of the events being characterized by a respective pair of pixel coordinates in the image frame and a respective event time.

In some embodiments of any of the above methods, each of the events is characterized by a respective event polarity.

In some embodiments of any of the above methods, the converting includes applying one or more preprocessing operations to the set of event-camera data; and wherein a zero value of a voxel in the voxel grid indicates "no event."

In some embodiments of any of the above methods, the one or more preprocessing operations include weighted accumulation configured to accumulate two or more events from the list of events into a corresponding single voxel in the voxel grid.

In some embodiments of any of the above methods, the one or more preprocessing operations further include normalization of accumulated voxel values based on a grid size of the voxel grid.

In some embodiments of any of the above methods, the neural network is configured to output a corresponding predicted voxel value in response to a received input specifying a set of coordinate values in the 3D space.

In some embodiments of any of the above methods, the neural network is configured to output predicted values for a corresponding slice of voxels of the voxel grid in response to a received input specifying a value of the time.

In some embodiments of any of the above methods, the neural network is selected from the group consisting of: a multilayer perceptron (MLP); a convolutional neural network (CNN) serially connected with an MLP; a tensor-decomposition neural network; and a hash-encoding neural network.

In some embodiments of any of the above methods, the neural network comprises a multilayer perceptron (MLP).

In some embodiments of any of the above methods, the MLP has a selectable number of serially connected layers; and wherein an activation function for a layer is selectable from a plurality of activation functions.

In some embodiments of any of the above methods, the first and second coordinates are positionally encoded prior to being applied to the MLP.

In some embodiments of any of the above methods, at least two different ones of the serially connected layers are configured to receive respective copies of the positionally encoded first and second coordinates as inputs.

In some embodiments of any of the above methods, an input specifying a set of coordinate values in the 3D space is subjected to tensor decomposition into a sum of products; wherein the neural network further comprises a linear projection layer connected to feed the MLP and configured to convert the sum of products into a feature vector; and wherein the MLP is configured to output a corresponding predicted voxel value in response to the feature vector.

In some embodiments of any of the above methods, the tensor decomposition is configured to factorize the input into a sum of vectors products, with each of the vector products being computed using three respective vectors.

In some embodiments of any of the above methods, the tensor decomposition is configured to factorize the input into a sum of vector-matrix products, with each of the vector-matrix products being computed using a respective matrix and a respective vector.

In some embodiments of any of the above methods, an input specifying a set of coordinate values in the 3D space is subjected to hash encoding using a plurality of hash tables of different respective resolutions and is further subjected to interpolation to generate a corresponding plurality of interpolated hash vectors; wherein the corresponding plurality of interpolated hash vectors is concatenated to generate a feature vector; and wherein the MLP is configured to output a corresponding predicted voxel value in response to the feature vector.

In some embodiments of any of the above methods, the training comprises receiving the voxel grid; receiving a training input comprising one or more coordinate values in the 3D space; generating a predicted voxel value corresponding to the coordinates of the training input; updating the parameters of the neural network based on a loss function, the loss function computing a measure of difference between the value of the voxel grid corresponding to the coordinates of the training input and the predicted voxel value.

In some embodiments of any of the above methods, the training is performed via gradient descent using an applied loss function constructed based on one or more primary loss functions selected from the group consisting of: mean square error (MSE) loss; structural similarity index measure (SSIM) loss; feature loss; and task-specific loss.

In some embodiments of any of the above methods, the applied loss function is a weighted sum of two or more of the primary loss functions.

According to yet another example embodiment disclosed above, e.g., in the summary section and/or in reference to any one or any combination of some or all of FIGS. 1-20, provided is a method of predicting event-camera data, comprising: inputting one or more coordinate values corresponding to a three-dimensional (3D) space to a neural network trained to represent a voxel grid, wherein first and second dimensions of the 3D space correspond to first and second spatial coordinates of an image frame corresponding to the event-camera data, and a third dimension of the 3D space corresponds to time; and wherein the voxel grid in the 3D space is generated by converting a set of the event-camera data into a corresponding set of voxel data for the 3D space.

In some embodiments of the above method, the set of the event-camera data includes a list of events, with each of the events being characterized by a respective pair of pixel coordinates in the image frame and a respective event time.

In some embodiments of any of the above methods, each of the events is further characterized by a respective event polarity.

In some embodiments of any of the above methods, a zero value of a voxel in the voxel grid indicates "no event."

In some embodiments of any of the above methods, the neural network is configured to output a corresponding predicted voxel value in response to a set of three coordinate values in the 3D space.

In some embodiments of any of the above methods, the neural network is configured to output predicted values for a corresponding slice of voxels of the voxel grid in response to a received input specifying a value of the time.

In some embodiments of any of the above methods, the neural network is selected from the group consisting of: a multilayer perceptron (MLP); a convolutional neural network (CNN) serially connected with an MLP; a tensor-decomposition neural network; and a hash-encoding neural network.

In some embodiments of any of the above methods, the neural network comprises a multilayer perceptron (MLP).

In some embodiments of any of the above methods, the first and second coordinates are positionally encoded prior to being applied to the MLP.

In some embodiments of any of the above methods, at least two different ones of the serially connected layers are configured to receive respective copies of the positionally encoded first and second coordinates as inputs.

In some embodiments of any of the above methods, an input specifying a set of coordinate values in the 3D space is subjected to tensor decomposition into a sum of products; wherein the neural network further comprises a linear projection layer connected to feed the MLP and configured to convert the sum of products into a feature vector; and wherein the MLP is configured to output a corresponding predicted voxel value in response to the feature vector.

In some embodiments of any of the above methods, the tensor decomposition is configured to factorize the input into a sum of vectors products, with each of the vector products being computed using three respective vectors.

In some embodiments of any of the above methods, the tensor decomposition is configured to factorize the input into a sum of vector-matrix products, with each of the vector-matrix products being computed using a respective matrix and a respective vector.

In some embodiments of any of the above methods, an input specifying a set of coordinate values in the 3D space is subjected to hash encoding using a plurality of hash tables of different respective resolutions and is further subjected to interpolation to generate a corresponding plurality of interpolated hash vectors; wherein the corresponding plurality of interpolated hash vectors is concatenated to generate a feature vector; and wherein the MLP is configured to output a corresponding predicted voxel value in response to the feature vector.

In some embodiments of any of the above methods, the method further comprises: sampling the voxel grid at different values of the time by repeating the inputting with different sets of coordinate values; and generating an event video by constructing a sequence of image frames using the samples of the voxel grid representing said different values of the time.

In some embodiments of any of the above methods, the method further comprises playing the event video on a display device.

A non-transitory computer-readable medium storing instructions that, when executed by an electronic processor, cause the electronic processor to perform operations comprising any of the above methods.

With regard to the processes, systems, methods, heuristics, etc. described herein, it should be understood that, although the steps of such processes, etc. have been described as occurring according to a certain ordered sequence, such processes could be practiced with the described steps performed in an order other than the order described herein. It further should be understood that certain steps could be performed simultaneously, that other steps could be added, or that certain steps described herein could be omitted. In other words, the descriptions of processes herein are provided for the purpose of illustrating certain embodiments and should in no way be construed so as to limit the claims.

Accordingly, it is to be understood that the above description is intended to be illustrative and not restrictive. Many embodiments and applications other than the examples provided would be apparent upon reading the above description. The scope should be determined, not with reference to the above description, but should instead be determined with reference to the appended claims, along with the full scope of equivalents to which such claims are entitled. It is anticipated and intended that future developments will occur in the technologies discussed herein, and that the disclosed systems and methods will be incorporated into such future embodiments. In sum, it should be understood that the application is capable of modification and variation.

All terms used in the claims are intended to be given their broadest reasonable constructions and their ordinary meanings as understood by those knowledgeable in the technologies described herein unless an explicit indication to the contrary is made herein. In particular, use of the singular articles such as "a," "the," "said," etc. should be read to recite one or more of the indicated elements unless a claim recites an explicit limitation to the contrary.

The Abstract of the Disclosure is provided to allow the reader to quickly ascertain the nature of the technical disclosure. It is submitted with the understanding that it will not be used to interpret or limit the scope or meaning of the claims. In addition, in the foregoing Detailed Description, it can be seen that various features are grouped together in various embodiments for the purpose of streamlining the disclosure. This method of disclosure is not to be interpreted as reflecting an intention that the claimed embodiments incorporate more features than are expressly recited in each claim. Rather, as the following claims reflect, inventive subject matter lies in fewer than all features of a single disclosed embodiment. Thus, the following claims are hereby incorporated into the Detailed Description, with each claim standing on its own as a separately claimed subject matter.

While this disclosure includes references to illustrative embodiments, this specification is not intended to be construed in a limiting sense. Various modifications of the described embodiments, as well as other embodiments within the scope of the disclosure, which are apparent to persons skilled in the art to which the disclosure pertains are deemed to lie within the principle and scope of the disclosure, e.g., as expressed in the following claims.

Some embodiments may be implemented as circuit-based processes, including possible implementation on a single integrated circuit.

Some embodiments can be embodied in the form of methods and apparatuses for practicing those methods. Some embodiments can also be embodied in the form of program code recorded in tangible media, such as magnetic recording media, optical recording media, solid state memory, floppy diskettes, CD-ROMs, hard drives, or any other non-transitory machine-readable storage medium, wherein, when the program code is loaded into and executed by a machine, such as a computer, the machine becomes an apparatus for practicing the patented invention(s). Some embodiments can also be embodied in the form of program code, for example, stored in a non-transitory machine-readable storage medium including being loaded into and/or executed by a machine, wherein, when the program code is loaded into and executed by a machine, such as a computer or a processor, the machine becomes an apparatus for practicing the patented invention(s). When implemented on a general-purpose processor, the program code segments combine with the processor to provide a unique device that operates analogously to specific logic circuits.

Unless explicitly stated otherwise, each numerical value and range should be interpreted as being approximate as if the word "about" or "approximately" preceded the value or range.

The use of figure numbers and/or figure reference labels in the claims is intended to identify one or more possible embodiments of the claimed subject matter in order to facilitate the interpretation of the claims. Such use is not to be construed as necessarily limiting the scope of those claims to the embodiments shown in the corresponding figures.

Although the elements in the following method claims, if any, are recited in a particular sequence with corresponding labeling, unless the claim recitations otherwise imply a particular sequence for implementing some or all of those elements, those elements are not necessarily intended to be limited to being implemented in that particular sequence.

Reference herein to "one embodiment" or "an embodiment" means that a particular feature, structure, or characteristic described in connection with the embodiment can be included in at least one embodiment of the disclosure. The appearances of the phrase "in one embodiment" in various places in the specification are not necessarily all referring to the same embodiment, nor are separate or alternative embodiments necessarily mutually exclusive of other embodiments. The same applies to the term "implementation."

Unless otherwise specified herein, the use of the ordinal adjectives "first," "second," "third," etc., to refer to an object of a plurality of like objects merely indicates that different instances of such like objects are being referred to, and is not intended to imply that the like objects so referred-to have to be in a corresponding order or sequence, either temporally, spatially, in ranking, or in any other manner.

Unless otherwise specified herein, in addition to its plain meaning, the conjunction "if" may also or alternatively be construed to mean "when" or "upon" or "in response to determining" or "in response to detecting," which construal may depend on the corresponding specific context. For example, the phrase "if it is determined" or "if [a stated condition] is detected" may be construed to mean "upon determining" or "in response to determining" or "upon detecting [the stated condition or event]" or "in response to detecting [the stated condition or event]."

Also, for purposes of this description, the terms "couple," "coupling," "coupled," "connect," "connecting," or "connected" refer to any manner known in the art or later developed in which energy is allowed to be transferred between two or more elements, and the interposition of one or more additional elements is contemplated, although not required. Conversely, the terms "directly coupled," "directly connected," etc., imply the absence of such additional elements.

As used herein in reference to an element and a standard, the term compatible means that the element communicates with other elements in a manner wholly or partially specified by the standard and would be recognized by other elements as sufficiently capable of communicating with the other elements in the manner specified by the standard. The compatible element does not need to operate internally in a manner specified by the standard.

The functions of the various elements shown in the figures, including any functional blocks labeled as "processors" and/or "controllers," may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and nonvolatile storage. Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

As used in this application, the terms "circuit," "circuitry" may refer to one or more or all of the following: (a) hardware-only circuit implementations (such as implementations in only analog and/or digital circuitry); (b) combinations of hardware circuits and software, such as (as applicable): (i) a combination of analog and/or digital hardware circuit(s) with software/firmware and (ii) any portions of hardware processor(s) with software (including digital signal processor(s)), software, and memory(ies) that work together to cause an apparatus, such as a mobile phone or server, to perform various functions); and (c) hardware circuit(s) and or processor(s), such as a microprocessor(s) or a portion of a microprocessor(s), that requires software (e.g., firmware) for operation, but the software may not be present when it is not needed for operation." This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

It should be appreciated by those of ordinary skill in the art that any block diagrams herein represent conceptual views of illustrative circuitry embodying the principles of the disclosure. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

"BRIEF SUMMARY OF SOME SPECIFIC EMBODIMENTS" in this specification is intended to introduce some example embodiments, with additional embodiments being described in "DETAILED DESCRIPTION" and/or in reference to one or more drawings. "BRIEF SUMMARY OF SOME SPECIFIC EMBODIMENTS" is not intended to identify essential elements or features of the claimed subject matter, nor is it intended to limit the scope of the claimed subject matter.

## REFERENCES

Chen, Hao, Bo He, Hanyu Wang, Yixuan Ren, Ser Nam Lim, and Abhinav Shrivastava. "Nerv: Neural representations for videos." Advances in Neural Information Processing Systems 34 (2021): pp. 21557-21568 (12 pages).

Chen, Anpei, Zexiang Xu, Andreas Geiger, Jingyi Yu, and Hao Su. "Tensorf: Tensorial radiance fields." In European Conference on Computer Vision, pp. 333-350. Cham: Springer Nature Switzerland, 2022. (18 pages)

Müller, Thomas, Alex Evans, Christoph Schied, and Alexander Keller. "Instant neural graphics primitives with a multiresolution hash encoding." ACM transactions on graphics (TOG) 41, no. 4 (2022): pp. 1-15 (15 pages).

Alex Zihao Zhu, Liangzhe Yuan, Kenneth Chaney, Kostas Daniilidis, "Unsupervised event-based learning of optical flow, depth, and egomotion," Proceedings of the IEEE/CVF Conference on Computer Vision and Pattern Recognition, pp. 989-997, 2019 (9 pages).

## Claims

1.  A method of representing event-camera data, the method comprising:

    converting a set of the event-camera data into a corresponding set of voxel data for a voxel grid in a three-dimensional (3D) space in which first and second dimensions correspond to first and second spatial coordinates of an image frame, and a third dimension corresponds to time; and
    training a neural network to represent the voxel grid, wherein the neural network is configured to output a corresponding voxel value in response to a received input specifying a set of coordinate values in the 3D space.

2. The method of claim 1, wherein the set of event-camera data includes a list of events, with each of the events being **characterized by** a respective pair of pixel coordinates in the image frame and a respective event time.

3. The method of claim 2, wherein each of the events is further **characterized by** a respective event polarity.

4. The method of any preceding claim,

   wherein the converting includes applying one or more preprocessing operations to the set of event-camera data; and
   wherein a zero value of a voxel in the voxel grid indicates "no event."

5. The method of claim 4, wherein the one or more preprocessing operations include weighted accumulation configured to accumulate two or more events from the list of events into a corresponding single voxel in the voxel grid.

6. The method of any preceding claim, wherein the neural network is configured to output predicted values for a corresponding slice of voxels of the voxel grid in response to a received input specifying a value of the time.

7. The method of any preceding claim, wherein the neural network comprises a multilayer perceptron (MLP).

8. The method of claim 7,

   wherein the MLP has a selectable number of serially connected layers; and
   wherein an activation function for a layer is selectable from a plurality of activation functions.

9. The method of claim 7 or 8, wherein the first and second spatial coordinates are positionally encoded prior to being applied to the MLP.

10. The method of claim 9, wherein at least two different ones of the serially connected layers are configured to receive respective copies of the positionally encoded first and second spatial coordinates as inputs.

11. The method of claim 7,

    wherein an input specifying a set of coordinate values in the 3D space is subjected to tensor decomposition into a sum of products;
    wherein the neural network further comprises a linear projection layer connected to feed the MLP and configured to convert the sum of products into a feature vector; and
    wherein the MLP is configured to output a corresponding predicted voxel value in response to the feature vector.

12. The method of claim 7,

    wherein an input specifying a set of coordinate values in the 3D space is subjected to hash encoding using a plurality of hash tables of different respective resolutions and is further subjected to interpolation to generate a corresponding plurality of interpolated hash vectors;
    wherein the corresponding plurality of interpolated hash vectors is concatenated to generate a feature vector; and
    wherein the MLP is configured to output a corresponding predicted voxel value in response to the feature vector.

13. The method of any preceding claim, wherein training the neural network comprises:

    receiving the voxel grid;
    receiving a training input comprising one or more coordinate values in the 3D space;
    generating a predicted voxel value corresponding to the coordinate values of the training input; and
    updating the parameters of the neural network based on a loss function, the loss function computing a measure of difference between the value of the voxel grid corresponding to the coordinate values of the training input and the predicted voxel value.

14. The method of any preceding claim, wherein the training is performed via gradient descent and wherein the loss function is constructed based on one or more primary loss functions selected from the group consisting of:

mean square error (MSE) loss;
structural similarity index measure (SSIM) loss;
feature loss; and
task-specific loss.

15. A method of predicting event-camera data, the method comprising:

inputting one or more coordinate values corresponding to a three-dimensional (3D) space to a neural network trained to represent a voxel grid,
wherein first and second dimensions of the 3D space correspond to first and second spatial coordinates of an image frame corresponding to the event-camera data, and a third dimension of the 3D space corresponds to time; and
wherein the voxel grid in the 3D space is generated by converting a set of the event-camera data into a corresponding set of voxel data for the 3D space.

100

110 — RAW EVENT DATA

120 — PREPROCESSING

130 — EVENT VOXEL GRID

140 — TRAINING

150 — NEURAL REPRESENTATION

## FIG. 1

RAW EVENT DATA — 110

WEIGHTED ACCUMULATION — 210

NORMALIZATION — 220

120

EVENT VOXEL GRID — 130

## FIG. 2

300

310 — INPUT VOXEL COORDINATES (SPACE AND TIME)

150 — MLP — 315

320 — PREDICTED VOXEL VALUE

## FIG. 3

VARIANT 1
(MLP)

$\gamma$
41

576

288

144

72

36

$v$
1

402    410₁    410₂    410₃    410₄    410₅

315

AFFINE + ReLU    AFFINE

## FIG. 4

VARIANT 2
(NeRF)

502

$\gamma$
41

$\gamma$
41

256

256

256

256

256

256

256

256

256

$v$
1

502    510₁    510₂    510₃    510₄    510₅    510₆    510₇    510₈    510₉

315

AFFINE + ReLU    AFFINE

## FIG. 5

315

502 → [γ 41]

VARIANT 3
(NeRF_V1)

[γ 41] → [576] → [576] → [576] → [576] → [576] → [576] → [576] → [576] → [576] --→ [v 1]

502   $510_1$   $510_2$   $510_3$   $510_4$   $510_5$   $510_6$   $510_7$   $510_8$   $510_9$

—→ AFFINE + ReLU   --→ AFFINE

## FIG. 6

315

702 → [γ 41]          [γ 41] ← 702

VARIANT 4
(NeRF_Long)

[γ 41] → [256] → [256] → [256] → [256] → [256] → [256] → o o o → [256] → [256] → [256] → [256] → [256] --→ [v 1]

702   $710_1$   $710_2$   $710_3$   $710_4$   $710_5$   $710_6$          $710_{12}$   $710_{13}$   $710_{14}$   $710_{15}$   $710_{16}$

16 BLOCKS

—→ AFFINE + ReLU   --→ AFFINE

## FIG. 7

EP 4 700 714 A1

FIG. 8

900

INPUT

CONVOLUTION

910

SUB-PIXEL
CONVOLUTION

920

SWISH
ACTIVATION

930

OUTPUT

NeRV BLOCK

FIG. 9

FIG. 10

EP 4 700 714 A1

FIG. 11

FIG. 12

EP 4 700 714 A1

FIG. 13

FIG. 14

FIG. 15

QUALITY-SIZE TRADE-OFF

FIG. 16

FIG. 17

PSNR-MODEL SIZE

1702

PSNR

MODEL SIZE (NUMBER OF PARAMETERS PER VOXEL)

1800

START

1802 — CONVERT EVENT-CAMERA DATA INTO CORRESPONDING VOXEL GRID DATA

1804 — TRAIN NEURAL NETWORK TO REPRESENT VOXEL GRID

1806 — PROVIDE TRAINED NEURAL NETWORK FOR DOWNSTREAM PROCESS OR OPERATION

END

FIG. 18

1900

START

INPUT ONE OR MORE COORDINATE VALUES CORRESPONDING TO 3D SPACE TO NEURAL NETWORK TRAINED TO REPRESENT VOXEL GRID — 1902

1904

YES — REPEAT?

NO

GENERATE EVENT VIDEO BY CONSTRUCTING SEQUENCE OF IMAGE FRAMES USING SLICES OF VOXEL GRID REPRESENTING DIFFERENT TIMES — 1906

PLAY EVENT VIDEO ON DISPLAY DEVICE — 1908

END

FIG. 19

FIG. 20

Europäisches
Patentamt

European
Patent Office

Office européen
des brevets

# EUROPEAN SEARCH REPORT

**Application Number**

EP 25 19 7164

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DANIEL GEHRIG ET AL: "End-to-End Learning of Representations for Asynchronous Event-Based Data", ARXIV.ORG, CORNELL UNIVERSITY LIBRARY, 201 OLIN LIBRARY CORNELL UNIVERSITY ITHACA, NY 14853, 17 April 2019 (2019-04-17), XP081462765, * abstract * * Sections 3.1-3.3; Section 6.1; Section 6.2 * | 1-15 | INV. G06V10/25 G06V10/44 G06V10/82 G06V10/764 G06V10/77 |
| X | BOCHEN XIE ET AL: "Event Voxel Set Transformer for Spatiotemporal Representation Learning on Event Streams", ARXIV.ORG, CORNELL UNIVERSITY LIBRARY, 201 OLIN LIBRARY CORNELL UNIVERSITY ITHACA, NY 14853, 7 March 2023 (2023-03-07), XP091455197, * Section III.A; Section III.B * | 1-15 | |
| X | US 2022/197312 A1 (VEMPRALA SAI HEMACHANDRA [US] ET AL) 23 June 2022 (2022-06-23) * paragraphs [0036] - [0062] * | 1-15 | TECHNICAL FIELDS SEARCHED (IPC) G06V |

The present search report has been drawn up for all claims

| Place of search | Date of completion of the search | Examiner |
|---|---|---|
| The Hague | 3 November 2025 | Androulidakis, Iosif |

## ANNEX TO THE EUROPEAN SEARCH REPORT
## ON EUROPEAN PATENT APPLICATION NO.

EP 25 19 7164

This annex lists the patent family members relating to the patent documents cited in the above-mentioned European search report.
The members are as contained in the European Patent Office EDP file on
The European Patent Office is in no way liable for these particulars which are merely given for the purpose of information.

03-11-2025

| Patent document cited in search report | Publication date | Patent family member(s) | Publication date |
|---|---|---|---|
| US 2022197312 A1 | 23-06-2022 | US 2022197312 A1<br>WO 2022132407 A1 | 23-06-2022<br>23-06-2022 |

EPO FORM P0459

For more details about this annex : see Official Journal of the European Patent Office, No. 12/82

## REFERENCES CITED IN THE DESCRIPTION

**Patent documents cited in the description**

- US 63685868
- EP 24212527

**Non-patent literature cited in the description**

- **ALEX ZIHAO ZHU** ; **LIANGZHE YUAN** ; **KENNETH CHANEY** ; **KOSTAS DANIILIDIS**. Unsupervised event-based learning of optical flow, depth, and egomotion. *Proceedings of the IEEE/CVF Conference on Computer Vision and Pattern Recognition*, 2019, 989-997
- **CHEN, HAO** ; **BO HE** ; **HANYU WANG** ; **YIXUAN REN** ; **SER NAM LIM** ; **ABHINAV SHRIVASTAVA**. Nerv: Neural representations for videos. *Advances in Neural Information Processing Systems*, 2021, vol. 34, 21557-21568
- TensoRF: Tensorial radiance fields. **CHEN, ANPEI** ; **ZEXIANG XU** ; **ANDREAS GEIGER** ; **JINGYI YU** ; **HAO SU**. European Conference on Computer Vision. Cham: Springer Nature Switzerland, 2022, 333-350
- **THOMAS MÜLLER** ; **ALEX EVANS** ; **CHRISTOPH SCHIED** ; **ALEXANDER KELLER**. Instant neural graphics primitives with a multiresolution hash encoding. *ACM transactions on graphics (TOG)*, 2022, vol. 41 (4), 1-15
- **CHEN, HAO** ; **BO HE** ; **HANYU WANG** ; **YIXUAN REN** ; **SER NAM LIM** ; **ABHINAV SHRIVASTAVA**. Nerv: Neural representations for videos.. *Advances in Neural Information Processing Systems*, 2021, vol. 34, 21557-21568
- Tensorf: Tensorial radiance fields.. **CHEN, ANPEI** ; **ZEXIANG XU** ; **ANDREAS GEIGER** ; **JINGYI YU** ; **HAO SU.** In European Conference on Computer Vision. Cham: Springer Nature Switzerland, 2022, 333-350
- **MÜLLER, THOMAS** ; **ALEX EVANS** ; **CHRISTOPH SCHIED** ; **ALEXANDER KELLER.** Instant neural graphics primitives with a multiresolution hash encoding. *ACM transactions on graphics (TOG)*, 2022, vol. 41 (4), 1-15